(19) Europäisches Patentamt / European Patent Office / Office européen des brevets

(11) **EP 4 365 994 A1**

(12) **EUROPEAN PATENT APPLICATION**
published in accordance with Art. 153(4) EPC

(43) Date of publication:
**08.05.2024 Bulletin 2024/19**

(51) International Patent Classification (IPC):
**H01M 4/587** (2010.01)    **H01M 10/0525** (2010.01)

(21) Application number: **22944037.5**

(86) International application number:
**PCT/CN2022/118758**

(22) Date of filing: **14.09.2022**

(87) International publication number:
**WO 2024/055204 (21.03.2024 Gazette 2024/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde City, Fujian 352100 (CN)**

(72) Inventors:
• **LI, Quanguo**
**Ninge, Fujian 352100 (CN)**

• **LIU, Qian**
**Ninge, Fujian 352100 (CN)**
• **YE, Yonghuang**
**Ninge, Fujian 352100 (CN)**
• **CHEN, Jiahua**
**Ninge, Fujian 352100 (CN)**
• **SUN, Jingxuan**
**Ninge, Fujian 352100 (CN)**
• **XIAO, Dejun**
**Ninge, Fujian 352100 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(54) **NEGATIVE ELECTRODE SHEET, SODIUM-ION BATTERY, ELECTRIC DEVICE, AND APPLICATION**

(57)    The present application relates to a negative electrode plate, a sodium ion battery, a power consuming device and the use, wherein the negative electrode plate comprises a negative electrode active material. The negative electrode active material comprises hard carbon, wherein $0.6\ \mu g/m \leq (D_v99 + D_v50)/(2 \times B) \leq 5\ \mu g/m$, wherein $D_v99$ and $D_v50$ represent a particle size corresponding to a cumulative volume distribution percentage of the negative electrode active material reaching 99% and 50%, respectively; and B represents the specific surface area of the negative electrode plate.

FIG. 1

EP 4 365 994 A1

**Description**

**Technical Field**

The present application relates to the technical field of sodium ion batteries, and further to a negative electrode plate, a sodium ion battery, a power consuming device, and the use.

**Background Art**

The statement here only provides the background information related to the present application and does not necessarily constitute the prior art.

With the development and growth of the new energy industry chain, the requirements for new energy batteries become higher and higher, and especially the safety of the new energy batteries is increasingly regarded as the primary design point. The traditional idea of prioritizing the energy endurance mileage is gradually shifting towards achieving high safety as a goal. Generally, the most important indicator for evaluating the safety of a battery is the high-temperature resistance of the battery. The higher the temperature that the battery can withstand, the less likely it is to cause the spread of combustion surrounding the battery when the battery is burning, thereby greatly improving the safety of a battery pack.

A sodium ion battery can achieve charging and discharging due to the intercalation-deintercalation process of sodium ions between the positive and negative electrodes. Compared with lithium in lithium ion batteries, the sodium resource is more widely distributed, the reserve thereof is more abundant, and the cost thereof is much lower than that of lithium. Therefore, sodium ion batteries are considered as a new generation of electrochemical systems with the potential to replace lithium ion batteries. The safety issue of sodium ion batteries is currently a research focus. However, the improvement in safety often leads to the power loss of a battery.

Therefore, it is urgent to develop a sodium ion battery that meets requirements of both high safety and high power.

**Summary**

In view of the above problems, the present application provides a negative electrode plate, which can meet the comprehensive requirements of both a high safety and a high power and is suitable for use in sodium ion batteries. Further provided are a sodium ion battery comprising the negative electrode plate, a power consuming device, and the use of the negative electrode plate for preparing a sodium ion battery.

**In a first aspect,** the present application provides a negative electrode plate, wherein the negative electrode plate comprises a negative electrode active material, and the negative electrode active material comprises hard carbon; and

the negative electrode plate further satisfies the following condition: $0.6 \ \mu g/m \leq (D_v99 + D_v50)/(2 \times B) \leq 5 \ \mu g/m$, wherein $D_v99$ represents a particle size corresponding to a cumulative volume distribution percentage of the negative electrode active material reaching 99%, in $\mu m$; $D_v50$ represents a particle size corresponding to a cumulative volume distribution percentage of the negative electrode active material reaching 50%, in $\mu m$; and B represents the specific surface area of the negative electrode plate, in $m^2/g$.

Generally, it is believed that the main features affecting the battery safety include a negative electrode, a positive electrode, an electrolyte solution, etc. After a lot of experimental research, the inventors of the present application have found that the particle size of the negative electrode active material will affect the safety of a battery, and particularly found that particles with a large particle size have an very significant effect on the battery safety. After a lot of exploratory research, the inventors of the present application have found that the larger the particle size of the particles of the negative electrode active material, the higher the temperature at which the thermal decomposition thereof starts and the higher the temperature that the negative electrode active material can withstand; moreover, a higher particle size results in a smaller specific surface area of the negative electrode active material, a slower reaction rate, and a safer battery, but leads to a power loss of the battery. Controlling the particle size of the negative electrode active material and the specific surface area of the negative electrode plate in a certain range can not only enable a battery to have a higher initial reaction temperature, but also avoid an adverse effect on the reaction activity rate as possible.

In the present application, the negative electrode active material comprises hard carbon. Hard carbon has a higher pyrolysis and carbonization temperature, which is beneficial for better improving the heat-resistance temperature and reducing the heat production. In addition, hard carbon has a structure with a larger internal interlayer spacing and a high porosity, such that more active ions can be intercalated, and the significant expansion of the structure is low, which is beneficial for improving the charge/discharge cycling performance and the service life of the battery. On this basis, comprehensively controlling the particle size of large particles in the negative electrode active material and the specific surface area of the negative electrode plate achieves the comprehensive advantages of both a high safety and a high power. Further, the particle size of large particles can be characterized by $(D_v99 + D_v50)/2$, and this characteristic is used, together with the specific surface area B of the negative electrode plate, to define an electrode plate thermal stability coefficient of the negative electrode plate, i.e., $(D_v99 + D_v50)/(2 \times B)$. The thermal stability coefficient of the negative electrode plate is adjusted to be in a suitable range, thereby enabling a battery to have the characteristics of a high safety and a high power and have an excellent high-temperature resistance.

In some embodiments of the present application, the negative electrode active material satisfies the following condition: $5 \mu m \leq (D_v99 + D_v50)/2 \leq 18 \mu m$; and

optionally, the negative electrode active material satisfies the following condition: $6 \mu m \leq (D_v99 + D_v50)/2 \leq 15 \mu m$;
optionally, the negative electrode active material satisfies the following condition: $7 \mu m \leq (D_v99 + D_v50)/2 \leq 12 \mu m$; and
optionally, the negative electrode active material satisfies the following condition: $8 \mu m \leq (D_v99 + D_v50)/2 \leq 10 \mu m$.

By means of reasonably controlling the large particles in the negative electrode active material in a relatively suitable range, it can be more convenient to combine with the precise control of the specific surface area of the negative electrode active material, thus better achieving the advantages of both a high safety and a high power of a battery.

In some embodiments of the present application, the negative electrode plate satisfies the following condition: $0.7 \mu g/m \leq (D_v99 + D_v50)/(2 \times B) \leq 5 \mu g/m$; and optionally, the negative electrode plate satisfies the following condition: $0.8 \mu g/m \leq (D_v99 + D_v50)/(2 \times B) \leq 4.2 \mu g/m$.

Further controlling the electrode plate thermal stability coefficient in the above ranges is beneficial to better balance the effect of the size of large particles on the battery safety and the effect of the specific surface area of a negative electrode active material on the power of the battery, thus better balancing a high safety and a high power of the battery.

In some embodiments of the present application, the negative electrode active material further satisfies the following condition: $(x \cdot D_v10) \leq D_v50 \leq (y \cdot D_v99)$, wherein x = 2.6, and y = 0.4; and optionally, x = 4, and y = 0.3.

Reasonably controlling the ratios x and y of $D_v50$ relative to $D_v10$ and $D_v99$ of the negative electrode active material can better ensure that both the small and large particles in the negative electrode active material have suitable particle sizes and contents, which better avoids the power loss of the battery caused by large particles, and maintains a higher power as possible while improving the safety of the battery.

In some embodiments of the present application, the negative electrode plate satisfies the following condition: $30 \text{ mAh} \cdot m^{-2} \leq CB \leq 140 \text{ mAh} \cdot m^{-2}$, wherein C is the capacity per gram of the negative electrode plate; optionally, $40 \text{ mAh} \cdot m^{-2} \leq CB \leq 125 \text{ mAh} \cdot m^{-2}$.

The inventors of the present application have found that the value of C/B of a negative electrode plate can reflect the reactivity of the negative electrode active material in the negative electrode plate to a certain extent. Synergistically controlling the capacity per gram of a negative electrode plate and the specific surface area of the negative electrode plate is beneficial for better controlling the reaction rate during the thermal runaway of a battery, which is beneficial for further improving the safety of the battery. The negative electrode plate is controlled to have a suitable capacity per gram, such that an appropriate amount of active sodium ions are intercalated, and a reaction rate is moderate; moreover, the specific surface area of the negative electrode plate is controlled to be in a relatively suitable range, such that the ion intercalation/deintercalation paths and polarization of an active material of a battery are moderate, thus ensuring the power performance of the battery.

In some embodiments of the present application, the capacity per gram C of the negative electrode plate satisfies 300 the following condition: $300 \text{ mAh/g} \leq C \leq 350 \text{ mAh/g}$, and optionally, the capacity per gram C of the negative electrode plate satisfies the following condition: $310 \text{ mAh/g} \leq C \leq 340 \text{ mAh/g}$.

The negative electrode plate is controlled to have a relatively suitable capacity per gram, such that an appropriate amount of active sodium ions are intercalated, and a reaction rate of a battery during thermal runaway is moderate, thus the safety of the battery is better.

In some embodiments of the present application, B is selected from $2.5 \text{ m}^2/g$ - $10 \text{ m}^2/g$; and optionally, B is selected from $3 \text{ m}^2/g$ - $7 \text{ m}^2/g$.

Controlling the specific surface area of the negative electrode plate in a relatively suitable range enables the ion intercalation/deintercalation paths and polarization of an active material of a battery to be moderate, which is more conducive to the power performance of the battery.

In some embodiments of the present application, the position T of a first exothermic reaction peak in a differential scanning calorimetry analysis for the negative electrode plate satisfies $150°C \leq T \leq 180°C$, wherein the test conditions for the differential scanning calorimetry analysis include: a nitrogen atmosphere, and a temperature increase rate of 10 °C/min; and optionally, $170°C \leq T \leq 180°C$.

Controlling the position T of the first exothermic reaction peak in the differential scanning calorimetry (DSC) analysis for the negative electrode plate in a relatively suitable range is more beneficial for further improving the safety of the battery.

In some embodiments of the present application, the negative electrode active material further comprises one or more of a soft carbon, a graphite, and an alloyed negative electrode; and

optionally, the mass percentage of hard carbon in the negative electrode active material is $\geq$ 50%; and
optionally, the mass percentage of hard carbon in the negative electrode active material is $\geq$ 90%.

On the basis of a negative electrode active material comprising hard carbon, the further introduction of other types of active materials, i.e., one or more of a soft carbon, a graphite, and an alloyed negative electrode, can enable a battery to have better comprehensive performance by virtue of the advantages of these materials. For example, the soft carbon has a low and stable charge/discharge potential platform, a large charge/discharge capacity, a high charge/discharge efficiency, and a good cycling performance. For example, the graphite has the advantages such as a good conductivity, a high initial efficiency, and a wide source.

For example, the alloyed negative electrode has the advantages such as a good power performance, and a high energy density.

**In a second aspect**, the present application provides a sodium ion battery, comprising a positive electrode plate, a negative electrode plate of the first aspect of the present application, a separator, and an electrolyte, wherein the separator is provided between the positive electrode plate and the negative electrode plate.

The sodium ion battery prepared by using the negative electrode plate of the first aspect of the present application has the comprehensive advantages of both high safety and high power.

In some embodiments of the present application, the electrolyte comprises an electrolyte sodium salt, and the electrolyte sodium salt comprises one or more of sodium hexafluorophosphate, sodium perchlorate, sodium tetrafluoroborate, sodium trifluoromethylsulfonate, sodium bis(fluorosulfonyl)imide, sodium bis(trifluoromethylsulfonyl)imide, sodium trifluoromethanesulfonate and sodium difluorophosphate; and

optionally, the electrolyte sodium salt comprises one or more of sodium hexafluorophosphate, sodium perchlorate, sodium tetrafluoroborate and sodium trifluoromethylsulfonate.

In some embodiments of the present application, the electrolyte further comprises an organic solvent, and the organic solvent comprises one or more of ethylene carbonate (EC), dimethyl carbonate (DMC), diethyl carbonate (DEC), ethyl methyl carbonate (EMC), propylene carbonate (PC), an ether such as ethylene glycol dimethyl ether (DME), tetrahydrofuran (THF), 2-methyltetrahydrofuran (2-MTHF), methyl acetate, ethyl propionate, fluoroethylene carbonate, diethyl ether, diethylene glycol dimethyl ether, triethylene glycol dimethyl ether, tetraethylene glycol dimethyl ether, and methyl tert-butyl ether; and

optionally, the organic solvent comprises one or more of ethylene carbonate, dimethyl carbonate, diethyl carbonate, ethyl methyl carbonate, propylene carbonate, ethylene glycol dimethyl ether, tetrahydrofuran and 2-methyltetrahydrofuran. The sodium salt has a high degree of solvation in the solvent and a high conductivity, which are beneficial for film formation and improving the power of the battery.

In some embodiments of the present application, the electrolyte further comprises an additive, and the additive comprises one or more of fluoroethylene carbonate (FEC), vinylene carbonate (VC), ethylene sulfate (DTD), 1,3-propane sultone (PS), prop-1-ene-1,3-sultone (PST), succinic anhydride (SA), lithium difluoro(oxalato)borate (LiDFOB), lithium difluorobis(oxalato)phosphate (LiDFOP), tris(trimethylsilyl) phosphate (TMSP), tris(trimethylsilyl) borate (TMSB), ethylene carbonate, propylene carbonate, ethyl methyl carbonate, diethyl carbonate, dimethyl carbonate, dipropyl carbonate, methyl propyl carbonate, ethyl propyl carbonate, butylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, diethyl sulfone, etc.; and

optionally, the additive comprises one or more of fluoroethylene carbonate, vinylene carbonate, ethylene sulfate, 1,3-propane sultone, prop-1-ene-1,3-sultone, succinic anhydride, lithium difluoro(oxalato)borate, lithium difluorobis(oxalato)phosphate, tris(trimethylsilyl) phosphate, and tris(trimethylsilyl) borate. Selecting a suitable additive is helpful for a battery to rapidly form a solid electrolyte interphase (SEI) film and increases the thickness and stability of the SEI film, such that the safety of the battery is improved.

In some embodiments of the present application, the negative electrode plate satisfies the following condition: $0.5°C \leq T \times M \leq 6°C$, wherein T and M are the position of a first exothermic reaction peak and the first-stage weight loss ratio in the differential scanning calorimetry (DSC) analysis for the negative electrode plate, respectively, and the test conditions for the differential scanning calorimetry analysis include: a nitrogen atmosphere, and a temperature increase rate of 10 °C/min; and

optionally, $0.65°C \leq T \times M \leq 5.2°C$; and
optionally, $0.75°C \leq T \times M \leq 4.5°C$.

The inventors of the present application have speculated that T × M can reflect the high-temperature resistance of the negative electrode plate to a certain extent. The particle size of negative electrode active material particles affects the starting point of the temperature of an exothermic reaction, and the larger the particles, the higher the temperature at which the reaction starts, and the safer a corresponding battery system. However, when the particles are larger, it is unfavorable for the power of the battery. Therefore, how to balance the safety and the power is crucial for preparing a battery with a high comprehensive performance. Shifting the position (T) of the first exothermic reaction peak in the differential scanning calorimetry (DSC) analysis for the negative electrode plate to a high temperature can increase the decomposition reaction temperature (corresponding to M) of the solid electrolyte interphase (SEI) film, which is beneficial for increasing the thickness of the SEI film, thus achieving an effect of further improving the safety.

In some embodiments of the present application, the first-stage weight loss ratio M in the differential scanning calorimetry analysis for the negative electrode plate satisfies the following condition: $0.25\% \leq M \leq 3.5\%$; wherein the test conditions for the differential scanning calorimetry analysis include: a nitrogen atmosphere, and a temperature increase rate of 10 °C/min; and

optionally, $0.5\% \leq M \leq 2.5\%$; and
optionally, $0.65\% \leq M \leq 2.0\%$.

Controlling the first-stage weight loss ratio M in the differential scanning calorimetry analysis for the negative electrode plate in a relatively suitable range can improve the interface stability of SEI, which is beneficial for improving the safety of a battery and also can achieve a better ion transport and charge/discharge performance.

In some embodiments of the present application, the positive electrode plate comprises a positive electrode active material, and the positive electrode active material comprises a positive electrode active material containing sodium ions, wherein the positive electrode active material containing sodium ions comprises one or more of a Prussian blue compound, a sodium transition metal oxide, and a polyanionic compound.

Suitable positive electrode active materials can be flexibly selected, which enables a sodium ion battery to have more selectivities and wider applicabilities.

**In a third aspect**, the present application provides a power consuming device, comprising a sodium ion battery of the second aspect of the present application.

The power consuming device prepared by using the sodium ion battery provided in the second aspect of the present application has not only high safety but also high power, and can meet the comprehensive needs of consumers for high safety and high performance. Details of one or more embodiments of the present application will be provided in the following accompanying drawings and description. Other features, objectives and advantages of the present application will become apparent from the description, accompanying drawings and claims.

## Brief Description of the Drawings

In order to better describe and illustrate those embodiments or examples of the present application disclosed herein, reference can be made to one or more accompanying drawings. The additional details or examples used to describe the accompanying drawings should not be considered as limiting the scope of any of the disclosed application, the embodiments or examples currently described, and these best modes of the present application currently understood. Moreover, like components are denoted by like reference numerals throughout the accompanying drawings. In the accompanying drawings:

Fig. 1 is an exothermic curve-thermal weight loss curve diagram of a differential scanning calorimetry (DSC) test for a negative electrode plate according to an embodiment of the present application, in which the Mass (%) represents the weight loss ratio, and the DTG (%/min) represents the exothermic rate;
Fig. 2 is a schematic diagram of a sodium ion battery according to an embodiment of the present application;
Fig. 3 is an exploded view of the sodium ion battery according to an embodiment of the present application as shown in Fig. 2; and
Fig. 4 is a schematic diagram of a power consuming device according to an embodiment of the present application, which uses a sodium ion battery as a power source.

List of reference numerals:
5 - sodium ion battery; 51 - housing; 52 - electrode assembly; 53 - cover plate; 6 - power consuming device.

## Detailed Description of Embodiments

Hereinafter, embodiments of the negative electrode plate, the sodium ion battery, the power consuming device, and the use of the present application are disclosed in detail with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

Unless otherwise stated, all the steps of the present application may be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". Further, the condition "A or B" is satisfied by any one of the following: A is true (or present) and B is false (or not present); A is false (or not present) and B is true (or present); or both A and B are true (or present).

In the present application, the technical features described in an open-ended manner includes not only the closed-ended technical solutions consisting of the listed features but also the open-ended technical solutions comprising the listed features.

The present application involves the expressions of "a plurality of", "various", "several", "multiple", etc., which refer to a quantity more than or equal to 2, unless otherwise specified. For example, "one or more" denotes one or more than or equal to two.

As used herein, the expressions "a combination thereof", "any combination thereof", "any combination manner thereof", etc. include all suitable combination manners of any two or more of the listed items.

Herein, the "suitable" in expressions such as "a suitable combination manner", "a suitable manner", and "any suitable manner" denotes that the technical solutions capable of implementing the present application shall prevail.

Herein, the expressions "preferably", "better", "superior", and "appropriately" are used only to describe an embodiment or example having a better effect, and it should be understood that such expressions do not constitute any limitation to the scope of protection of the present application. If there are multiple "preferably" in a technical solution, in the case of no contradictions or mutual constraints, each "preferably" is independent, unless otherwise stated.

In the present application, the expressions such as "further", "still further", and "particularly" are used for descriptive purpose to illustrate the differences in content, but should not be construed as limiting the scope of protection of the present application.

In the present application, in the expressions such as "a first aspect", "a second aspect", "a third aspect" and "a fourth aspect", the terms "first", "second", "third", and "fourth" are used for descriptive purposes only and cannot be construed as indicating or implying the relative importance or quantities, and also cannot be construed as implicitly indicating the importance or quantity of the technical features indicated. Moreover, the terms "first", "second", "third", and "fourth" are used for purposes of non-exhaustive recitation and description only and it should be understood that same does not constitute the closed-ended limitation on quantities.

In the present application, the term "room temperature" typically denotes 4°C - 35°C, preferably 20°C $\pm$ 5°C. In some embodiments of the present application, the room temperature denotes 20°C - 30°C.

In the present application, if an unit involved in an numerical range only appears after the right endpoint value, it means that the units of the left endpoint value and the right endpoint value are the same. For example, 3-5 h denotes that the units of both the left endpoint value of "3" and the right endpoint value of "5" are h (hour).

The weights of relative components mentioned in the description of an embodiment of the present application can not only indicate the contents of the components, but also can denote the proportional relation of the weights of the components. Therefore, the contents of relative components scaled up or down in accordance with those defined in the description of the embodiment of the present application fall within the scope disclosed in the description of the embodiment of the present application. Further, the unit of weight involved in the description of an embodiment of the present application may be those well known in the chemical industry, such as $\mu$g, mg, g, and kg.

Generally, it is believed that the main factors affecting the battery safety include a negative electrode, a positive electrode, an electrolyte solution, etc. After a lot of experimental research, the inventors of the present application have found that the particle size of the negative electrode active material will affect the safety of a battery, and particularly found that particles with a large particle size have an very significant effect on the battery safety. After a lot of exploratory research, the inventors of the present application have found that the larger the particle size of the particles of the negative electrode active material, the higher the temperature at which the thermal decomposition thereof starts and the higher the temperature that the negative electrode active material can withstand; moreover, a higher particle size results in a smaller specific surface area of the negative electrode active material, a slower reaction rate, and a safer battery, but leads to a power loss of the battery. Therefore, how to balance the safety requirement and the power requirement for a battery is crucial for preparing a battery with an excellent comprehensive performance.

Various types of batteries are greatly different from each other in terms of the parameters such as the particle size and the specific surface area of a negative electrode material, which leads to significant differences in parameters of different types of batteries when designing their particle sizes, specific surface areas and relative parameters, requiring specialized designs for each type of battery. For examples, the materials or parameters suitable for a lithium ion battery may not be suitable for a sodium ion battery. For example, the negative electrode active material for a sodium ion battery in traditional technologies is typically hard carbon, which has a smaller $D_v50$, about a few micrometers (e.g., 5-6 $\mu$m), and accordingly a larger specific surface area; while a graphite negative electrode is more commonly used in a lithium ion battery in traditional technologies, the $D_v50$ thereof is generally in a range of dozen to dozens of micrometers, and the specific surface area thereof is smaller.

In view of the common technical problems mentioned above, **in a first aspect**, the present application provides a negative electrode plate, wherein the negative electrode plate comprises a negative electrode active material, and the negative electrode active material comprises hard carbon; and

the negative electrode plate further satisfies the following condition: 0.6 $\mu$g/m $\leq (D_v99 + D_v50)/(2 \times B) \leq 5$ $\mu$g/m; and wherein $D_v99$ represents a particle size corresponding to a cumulative volume distribution percentage of the negative electrode active material reaching 99%, in $\mu$m; $D_v50$ represents a particle size corresponding to a cumulative volume distribution percentage of the negative electrode active material reaching 50%, in $\mu$m; B represents the specific surface area of the negative electrode plate, in $m^2/g$.

In the context of the present application, the particle size of a material can be characterized by a volume cumulative distribution particle size $D_vN$ (wherein N represents any numerical value selected from 0-100), which denotes the particle size corresponding to a cumulative volume distribution percentage of the material reaching N%, with the volume percentage of those having a particle size less than or equal to $D_vN$ being N%. $D_vN$ can be obtained from the volume cumulative distribution curve of the particle size of a material, and the volume cumulative distribution curve starts from zero on the small particle size side, unless otherwise stated. Taking $D_v99$, $D_v90$, $D_v50$, and $D_v10$ as examples, $D_v99$ denotes a particle size corresponding to a cumulative volume distribution percentage of a material reaching 99%; $D_v90$ denotes a particle size corresponding to a cumulative volume distribution percentage of a material reaching 90%; $D_v50$ denotes a particle size corresponding to a cumulative volume distribution percentage of a material reaching 50%; and $D_v10$ denotes a particle size corresponding to a cumulative volume distribution percentage of a material reaching 10%. For example, $D_v50$ indicates that 50% particles by volume of a material have a particle size less than or equal to $D_v50$, and 50% particles by volume of the material have a particle size larger than $D_v50$. For example, $D_v90$ indicates that 90% particles by volume of a material have a particle size less than or equal to $D_v90$, and 10% particles by volume of the material have a particle size larger than $D_v90$. For example, $D_v10$ indicates that 10% particles by volume of a material have a particle size less than or equal to $D_v10$, and 90% particles by volume of the material have a particle size larger than $D_v10$. A person skilled in the art could understand the meanings of $D_v99$, $D_v90$, $D_v50$, and $D_v10$ and can determine same by means of an instrument and method well known in the art. For example, it can be conveniently measured with a laser particle size analyzer, such as Mastersizer 2000E laser particle size analyzer from Malvern Instruments Co., Ltd., UK, and a LS-909 laser particle size analyzer (OMEC), with reference to GB/T 19077-2016 Particle Size Distribution - Laser Diffraction Method.

In the context of the present application, $(D_v99 + D_v50)/2$ can be used to characterize the particle size of large particles in a material, which can be denoted as "an average particle size of large particles." Controlling the average numerical values of $D_v99$ and $D_v50$ can reflect the particle size level of large particles in a material. The larger the value, the larger the particle size of large particles in the material. According to the research of the inventors of the present application, the lager the particle size of negative electrode active material particles, the higher the initial temperature of the thermal runaway of a battery and thus the better the safety of the battery.

The negative electrode plate of the first aspect of the present application comprises a negative electrode current collector and a negative electrode film layer provided on at least one surface of the negative electrode current collector, the negative electrode film layer comprising a negative electrode active material.

In the context of the present application, the specific surface area B of the negative electrode plate refers to the specific surface area of the above negative electrode film layer (i.e., without considering the contribution of the negative electrode current collector), unless otherwise defined. Further, the specific surface area B of the negative electrode plate refers to the ratio of the sum of the outer surface area of the negative electrode film layer and the internal surface area of the internal pores to the weight of the negative electrode film layer, and the unit thereof can be $m^2/g$. The definition of the specific surface area B of the negative electrode plate can be made with reference to the standard GB/T 19587-2004.

In the present application, the specific surface area B of a negative electrode plate can be measured by means of an instrument and method well known in the art. For example, the specific surface area can be measured by means of a nitrogen adsorption specific surface area analysis test method and calculated with a BET (Brunauer Emmett Teller) method, wherein the nitrogen adsorption specific surface area analysis test can be carried out by means of a Tri StarII mode specific surface area and porosity analyzer from Micromeritics in the United States, and for the test steps, reference can be made to GB/T 19587-2004. In some embodiments, the specific surface area of the negative electrode plate can be measured by means of the method as follows: the sample to be measured is selected, which may be directly a prepared negative electrode plate, or a negative electrode plate disassembled from a battery (in this case, the negative electrode plate needs to be washed with anhydrous ethanol to remove an electrolyte solution, and dried in a vacuum drying oven at 60°C for 1-2 hours); and then nitrogen or argon is used as an adsorption gas, the specific surface area and porosity analyzer is used for measuring and plotting an adsorption-desorption curve with a relative pressure of $P/P_0$ being 0-0.99, and the specific surface area of the negative electrode plate is calculated by means of the BET method, wherein P represents the equilibrium adsorption pressure, and $P_0$ represents the saturated vapor pressure. When the test sample is a negative electrode active material, the following method can be used to prepare a negative electrode active material powder: The specific surface area of the active material can be measured by means of the method as follows: the negative electrode active material is dried in a vacuum drying oven at 200°C for 2 hours; and then the specific surface area of the negative electrode active material is measured by means of the above gas adsorption test method. In the present application, the larger the specific surface area of a negative electrode plate, the slower the thermal runaway reaction rate of a battery and thus the better the safety of the battery.

In some embodiments, the particle size and the specific surface area of a negative electrode active material can be obtained by the following control or screening methods (but are not limited to these methods): method I: various negative electrode material precursors, e.g., wheat straws, coconut husks, and asphalts, are selected to prepare materials with different specific surface areas; and method II: different crushing times and rotational speeds, and different filter screens are set during the synthesis of the negative electrode material to obtain negative electrode materials with different particle sizes.

In the context of the present application, $(D_v99 + D_v50)/(2 \times B)$ is defined as the electrode plate thermal stability coefficient and denoted as S. Such a parameter can reflect the thermal stability of an electrode plate, and when the value is controlled in a reasonable range (0.6 μg/m - 5 μg/m), the electrode plate can withstand a high temperature and have a small degree of thermal runaway.

Controlling the particle size of the negative electrode active material and the specific surface area of the negative electrode plate in a certain range can not only enable a battery to have a higher initial reaction temperature, but also avoid an adverse effect on the reaction activity rate as possible. In the present application, comprehensively controlling the particle size of large particles in the negative electrode active material and the specific surface area of the negative electrode plate achieves the comprehensive advantages of both a high safety and a high power. Further, $(D_v99 + D_v50)/2$ is defined to characterize the particle size of large particles, and this characteristic is also used, together with the specific surface area B of the negative electrode plate, to define the electrode plate thermal stability coefficient of the negative electrode plate, i.e., $(D_v99 + D_v50)/(2 \times B)$. The electrode plate thermal stability coefficient is adjusted to be in a suitable range, thereby enabling a battery to have the characteristics of a high safety and a high power and have an excellent high-temperature resistance.

Further, the negative electrode active material comprises hard carbon. Hard carbon has a higher pyrolysis and carbonization temperature, which is beneficial for better improving the heat-resistance temperature and reducing the heat production. In addition, hard carbon has a structure with a larger internal interlayer spacing and a high porosity, such that more metal ions can be intercalated, and the significant expansion of the structure is low, which is beneficial for improving the charge/discharge cycling performance and the service life of the battery.

In the present application, the lager the particle size of negative electrode active material particles, the higher the initial temperature of the thermal runaway of a battery and thus the better the safety of the battery; and the larger the specific surface area of a negative electrode plate, the slower the thermal runaway reaction rate of a battery and thus the better the safety of the battery. However, if $(D_v99 + D_v50)/2$ is too large, it will result in a lower battery power and energy density. When $(D_v99 + D_v50)/(2 \times B)$ is less than 0.6 $\mu$g/m, the particle size of large particles is too small to increase the reaction temperature of the material, or the specific surface area is too large, which is prone to cause a thermal runaway rate to be too fast; and when $(D_v99 + D_v50)/(2 \times B)$ is more than 5 $\mu$g/m, the particle size of large particles is too large, which causes normal active sites of the battery to be too few, such that the charge/discharge performance of the battery is deteriorated.

In some embodiments, the negative electrode active material satisfies the following condition: 5 $\mu$m $\leq (D_v99 + D_v50)/2 \leq 18$ $\mu$m.

In some embodiments, the negative electrode active material satisfies the following condition: 6 $\mu$m $\leq (D_v99 + D_v50)/2 \leq 15$ $\mu$m.

In some embodiments, the negative electrode active material satisfies the following condition: 7 $\mu$m $\leq (D_v99 + D_v50)/2 \leq 12$ $\mu$m.

In some embodiments, the negative electrode active material satisfies the following condition: 8 $\mu$m $\leq (D_v99 + D_v50)/2 \leq 10$ $\mu$m.

In some embodiments, the $(D_v99 + D_v50)/2$ of the negative electrode active material may also be selected from any one of the values below or a range constituted by any two thereof: 5 $\mu$m, 5.2 $\mu$m, 5.4 $\mu$m, 5.5 $\mu$m, 5.6 $\mu$m, 5.8 $\mu$m, 6 $\mu$m, 6.2 $\mu$m, 6.4 $\mu$m, 6.5 $\mu$m, 6.6 $\mu$m, 6.8 $\mu$m, 7 $\mu$m, 7.2 $\mu$m, 7.4 $\mu$m, 7.5 $\mu$m, 7.6 $\mu$m, 7.8 $\mu$m, 8 $\mu$m, 8.2 $\mu$m, .4 $\mu$m, 8.5 $\mu$m, 8.6 $\mu$m, .8 $\mu$m, 9 $\mu$m, 9.5 $\mu$m, 10 $\mu$m, 10.5 $\mu$m, 11 $\mu$m, 11.5 $\mu$m, 12 $\mu$m, 12.5 $\mu$m, 13 $\mu$m, 13.5 $\mu$m, 14 $\mu$m, 15 $\mu$m, 15.5 $\mu$m, 16 $\mu$m, 16.5 $\mu$m, 17 $\mu$m, 17.5 $\mu$m, 17.7 $\mu$m, etc.

By means of reasonably controlling the large particles in the negative electrode active material in a relatively suitable range, it can be more convenient to combine with the precise control of the specific surface area of the negative electrode active material, thus better achieving the advantages of both a high safety and a high power of a battery.

In some embodiments, the negative electrode plate satisfies the following condition: 0.7 $\mu$g/m $\leq (D_v99 + D_v50)/(2 \times B) \leq 5$ $\mu$g/m.

In some embodiments, the negative electrode plate satisfies the following condition: 0.8 $\mu$g/m $\leq (D_v99 + D_v50)/(2 \times B) \leq 4.2$ $\mu$g/m.

In some embodiments, the $(D_v99 + D_v50)/(2 \times B)$ of the negative electrode plate may also be selected from any one of the values below or a range constituted by any two thereof: 0.6 $\mu$g/m, 0.7 $\mu$g/m, 0.8 $\mu$g/m, 0. 9 $\mu$g/m, 1 $\mu$g/m, 1.2 $\mu$g/m, 1.4 $\mu$g/m, 1.5 $\mu$g/m, 1.6 $\mu$g/m, 1.8 $\mu$g/m, 2 $\mu$g/m, 2.2 $\mu$g/m, 2.5 $\mu$g/m, 2.6 $\mu$g/m, 2.8 $\mu$g/m, 3 $\mu$g/m, 3.5 $\mu$g/m, 4 $\mu$g/m, 4.5 $\mu$g/m, 5 $\mu$g/m, 5.5 $\mu$g/m, 6 $\mu$g/m, etc.

Further controlling the electrode plate thermal stability coefficient, i.e., $(D_v99 + D_v50)/(2 \times B)$, in a relatively suitable range is beneficial for better balancing the effect of the size of large particles on the battery safety and the effect of the specific surface area of a negative electrode plate on the power of the battery, thus better balancing a high safety and a high power of the battery.

In some embodiments of the present application, the negative electrode active material further satisfies the following condition: $(x \cdot D_v10) \leq D_v50 \leq (y \cdot D_v99)$, wherein x = 2.6, and y = 0.4; and optionally, x = 3, and y = 0.3.

Reasonably controlling the ratios x and y of $D_v50$ relative to $D_v10$ and $D_v99$ of the negative electrode active material can better ensure that both the small and large particles in the negative electrode active material have suitable particle sizes and contents, which better avoids the energy density loss caused by large particles, and maintains a higher energy density as possible while improving the safety of the battery. When x is relatively large, the particle size of small particles is small and the specific surface area is large, which will lower the temperature that the material can withstand; and when x is relatively small, the particle size of small particles is close to the average particle size, which may cause the filling of pores between particles to be insufficient, and the energy density of the electrode plate is small. When y is relatively large, the large particles are small, which may not have the effect of filling pores with particles, and the energy density of the electrode plate is small; and when y is relatively small, the large particles are so large that the ion shuttling paths are long, which may reduce the power of the battery.

In some embodiments of the present application, the negative electrode plate satisfies the following condition: 30 mAh·m$^{-2}$ $\leq$ CB $\leq$ 140 mAh·m$^{-2}$, wherein C is the capacity per gram of the negative electrode plate.

In some embodiments, 40 mAh·m$^{-2}$ $\leq$ CB $\leq$ 125 mAh·m$^{-2}$.

In some embodiments, the C/B of the negative electrode plate may also be selected from any one of the values below or a range constituted by any two thereof: 30 mAh·m$^{-2}$, 35 mAh·m$^{-2}$, 40 mAh·m$^{-2}$, 45 mAh·m$^{-2}$, 50 mAh·m$^{-2}$, 55 mAh·m$^{-2}$, 60 mAh·m$^{-2}$, 65 mAh·m$^{-2}$, 70 mAh·m$^{-2}$, 75 mAh·m$^{-2}$, 80 mAh·m$^{-2}$, 85 mAh·m$^{-2}$, 90 mAh·m$^{-2}$, 95 mAh·m$^{-2}$, 100 mAh·m$^{-2}$, 105 mAh·m$^{-2}$, 110 mAh·m$^{-2}$, 115 mAh·m$^{-2}$, 120 mAh·m$^{-2}$, 125 mAh·m$^{-2}$, 130 mAh·m$^{-2}$, 135 mAh·m$^{-2}$, 140 mAh·m$^{-2}$, etc.

The inventors of the present application have found that the value of C/B of a negative electrode plate can reflect the reactivity of the negative electrode plate to a certain extent. Synergistically controlling the capacity per gram of a negative electrode plate and the specific surface area of the negative electrode plate is beneficial for better controlling the reaction rate during the thermal runaway of a battery, which is beneficial for further improving the safety of the battery. The negative electrode plate is controlled to have a suitable capacity per gram, such that an appropriate amount of active sodium ions are intercalated, and a reaction rate is moderate; moreover, the specific surface area of the negative electrode plate is controlled to be in a relatively suitable range, such that the ion intercalation/deintercalation paths and polarization of an active material of a battery are moderate, thus ensuring the power performance of the battery.

When C/B is small, (e.g., less than 30 mAh·m$^{-2}$), the capacity per gram of the negative electrode active material is low, the capacity of the battery is low, or the specific surface area of the negative electrode plate is large, such that the reaction rate during the thermal runaway of the battery is large and the safety of the battery is relatively low. When C/B is large (e.g., more than 140 mAh·m$^{-2}$), the capacity per gram of the negative electrode active material is high, such that a large amount of active ions are intercalated, and once out of control, the thermal runaway is more severe; or the specific surface area of the electrode plate is very small and the volume of the material particles is relatively large, such that the ion intercalation/deintercalation paths of an active material of a battery are long and the polarization of the active material is high, resulting in a relatively poor power performance of the battery.

In some embodiments of the present application, the capacity per gram C of the negative electrode plate satisfies 300 mAh/g $\leq$ C $\leq$ 350 mAh/g.

In some embodiments, the capacity per gram C of the negative electrode plate satisfies 310 mAh/g $\leq$ C $\leq$ 340 mAh/g.

In some embodiments, the capacity per gram C of the negative electrode plate may also be selected from any one of the values below or a range constituted by any two thereof: 300 mAh/g, 305 mAh/g, 310 mAh/g, 315 mAh/g, 320 mAh/g, 325 mAh/g, 330 mAh/g, 335 mAh/g, 340 mAh/g, 345 mAh/g, 350 mAh/g, etc.

In the present application, the capacity per gram of the negative electrode plate can be measured with reference to the WI-ATC-2014 Capacity Per Gram Test Rule. Before the test, the electrode plate is treated as follows: the electrode plate may be directly a prepared negative electrode plate, or a negative electrode plate disassembled from a battery (in this case, the negative electrode plate needs to be washed with anhydrous ethanol to remove an electrolyte solution, and then dried in a vacuum drying oven at 60°C for 2 hours), then the electrode plate is punched into a plurality of small discs by means of a punching machine, and each small disc is weighed to obtained a weight average value, denoted as W1; and then the active material on the small disc is washed off, the small discs are dried and weighed to obtain the weight average value W2 of the small disc substrates, and the weight of the active material is (W1 - W2). When both sides of the negative electrode plate are coated with a negative electrode slurry, the weight of the negative electrode active material on each side of each small disc substrate is (W1 - W2)/2. On the basis of the capacity $C_0$ of the small disc, the capacity per gram is calculated as = $C_0$/(W1 - W2), in mAh/g. In some embodiments, $C_0$ can be measured by means of the method as follows: a small disc prepared by means of a punching machine is used, the active material layer on one side of the substrate is wiped off with alcohol, and an electrolyte solution is injected to make same into a button battery. Then the battery is charged and discharged at a current of 0.1 C between 0-2 V. The capacity of the battery after being fully charged to 2 V and then fully discharged to 0 V is $C_0$ (in mAh). The negative electrode plate is controlled to have a suitable capacity per gram, such that an appropriate amount of active sodium ions are intercalated, and a reaction rate of a battery during thermal runaway is moderate, thus the safety of the battery is better.

In some embodiments of the present application, the specific surface area B of the negative electrode plate is selected from 2.5 m$^2$/g - 10 m$^2$/g.

In some embodiments, the specific surface area B of the negative electrode plate is selected from 3 m$^2$/g - 7 m$^2$/g.

In some embodiments, the specific surface area B of the negative electrode plate may also be selected from any one of the values below or a range constituted by any two thereof: 2.5 m$^2$/g, 3 m$^2$/g, 3.5 m$^2$/g, 4 m$^2$/g, 4.5 m$^2$/g, 5 m$^2$/g, 5.5 m$^2$/g, 6 m$^2$/g, 6.5 m$^2$/g, 7 m$^2$/g, 7.5 m$^2$/g, 8 m$^2$/g, 8.5 m$^2$/g, 9 m$^2$/g, 9.5 m$^2$/g, 10 m$^2$/g, etc.

Controlling the specific surface area of the negative electrode plate and the particle size of the negative electrode active material in a relatively suitable range enables the ion intercalation/deintercalation paths and polarization of an active material of a battery to be moderate, which is more conducive to the power performance of the battery.

In some embodiments of the present application, the position T of a first exothermic reaction peak in a differential scanning calorimetry analysis for the negative electrode plate satisfies 150°C $\leq$ T $\leq$ 180°C, Further, the test conditions for the differential scanning calorimetry analysis include: a nitrogen atmosphere, and a temperature increase rate of 5°C /min - 10°C /min.

In the present application, unless otherwise stated, the test conditions for the differential scanning calorimetry analysis may include: a nitrogen atmosphere, and a temperature increase rate of 5 °C/min - 10 °C/min. The non-limiting examples of the temperature increase rate are, for example, 5 °C/min, 7.5 °C/min, 10°C /min, etc.

In some embodiments, T satisfies 170°C $\leq$ T $\leq$ 180°C.

In some embodiments, T may also be selected from any one of the values below or constituted by any two thereof: 150°C, 155°C, 160°C, 165°C, 170°C, 175°C, 180°C, etc.

Controlling the position T of the first exothermic reaction peak in the differential scanning calorimetry (DSC) analysis for the negative electrode plate in a relatively suitable range is beneficial for further improving the safety of the battery. If T is too low, it cannot achieve the effect of improving the safety of the battery, while a higher T poses technical difficulties in implementation, requiring the replacement of an organic polymer binder in a traditional electrode plate powder with a more high-temperature resistant substance and increasing the pyrolysis temperature of the negative electrode active material.

The negative electrode active material of the negative electrode plate provided in the first aspect of the present application comprises at least hard carbon.

In some embodiments, the mass percentage of hard carbon in the negative electrode active material is ≥ 50%.

In some embodiments, the mass percentage of hard carbon in the negative electrode active material is ≥ 90%.

In some embodiments, the mass percentage of hard carbon in the negative electrode active material may also be selected from any one of the percentages below or a range constituted by any two thereof: 50%, 55%, 60%, 65%, 70%, 75%, 80%, 85%, 90%, 95%, 96%, 97%, 98%, 99%, 100%, etc.

Since hard carbon has a higher pyrolysis and carbonization temperature, a higher content of hard carbon is more beneficial for better improving the heat-resistance temperature and reducing heat production. In addition, hard carbon has a structure with a larger internal interlayer spacing and a high porosity, such that more metal ions can be intercalated, and the significant expansion of the structure is low, which is beneficial for improving the charge/discharge cycling performance and the service life of the battery.

In some embodiments of the present application, the negative electrode active material further comprises one or more of a soft carbon, a graphite, and an alloyed negative electrode. On the basis of a negative electrode active material comprising hard carbon, the further introduction of other types of active materials, i.e., one or more of a soft carbon, a graphite, and an alloyed negative electrode, can enable a battery to have better comprehensive performance by virtue of the advantages of these materials. For example, the soft carbon has a low and stable charge/discharge potential platform, a large charge/discharge capacity, a high charge/discharge efficiency, and a good cycling performance. For example, the graphite has the advantages such as a good conductivity, a high initial efficiency, and a wide source. For example, the alloyed negative electrode has the advantages such as a high power and a high energy density.

Negative electrode plate

The negative electrode plate of the first aspect of the present application comprises a negative electrode current collector and a negative electrode film layer provided on at least one surface of the negative electrode current collector, the negative electrode film layer comprising a negative electrode active material. The definition of the negative electrode active material is as stated above.

As a non-limiting example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil, an aluminum foil, an iron foil, and a nickel foil may be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, aluminum, an aluminum alloy etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may optionally comprise a conductive agent. The conductive agent may be selected from at least one of superconductive carbon, acetylene black, carbon black, Ketjen black, carbon dots, carbon nanotubes, graphene, and carbon nanofibers.

In some embodiments, the negative electrode film layer may optionally comprise other auxiliary agents, such as a thickening agent (e.g., sodium carboxymethyl cellulose (CMC-Na)), etc.

In some embodiments, the negative electrode plate can be prepared as follows: dispersing the above-mentioned components for preparing the negative electrode plate, such as a negative electrode active material, a conductive agent, a binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

**In a second aspect**, the present application provides a sodium ion battery, comprising a positive electrode plate, a negative electrode plate of the first aspect of the present application, a separator, and an electrolyte, wherein the separator is provided between the positive electrode plate and the negative electrode plate.

The sodium ion battery prepared by using the negative electrode plate of the first aspect of the present application has the comprehensive advantages of both a high safety and a high power. Generally, a sodium ion battery comprises a positive electrode plate, a negative electrode plate, an electrolyte and a separator. During the charge/discharge process of the battery, active ions ($Na^+$) are intercalated and de-intercalated back and forth between a positive electrode plate and a negative electrode plate. The electrolyte functions to conduct ions between the positive electrode plate and the negative electrode plate. The separator is provided between the positive electrode plate and the negative electrode plate, and mainly prevents the positive and negative electrodes from short-circuiting and enables ions to pass through.

It should be understood that the sodium ion battery of the second aspect is a secondary battery, unless otherwise specified.

Electrolyte

The electrolyte functions to conduct ions between the positive electrode plate and the negative electrode plate. The type of the electrolyte is not particularly limited in the present application, and can be selected according to actual requirements. For example, the electrolyte may be in a liquid state, a gel state or an all-solid state.

In some embodiments, an electrolyte solution is used as the electrolyte. The electrolyte solution comprises an electrolyte sodium salt and a solvent.

In some embodiments, the electrolyte sodium salt may be selected from one or more of sodium hexafluorophosphate ($NaPF_6$), sodium perchlorate ($NaClO_4$), sodium tetrafluoroborate ($NaBF_4$), sodium bis(fluorosulfonyl)imide, sodium bis(trifluoromethylsulfonyl)imide, sodium trifluoromethanesulfonate, sodium difluorophosphate, etc.

In some embodiments, the electrolyte sodium salt comprises one or more of sodium hexafluorophosphate, sodium perchlorate, sodium tetrafluoroborate, and sodium trifluoromethylsulfonate.

In some embodiments of the present application, the electrolyte further comprises an organic solvent.

In some embodiments of the present application, the organic solvent may comprise one or more of ethylene carbonate, dimethyl carbonate, diethyl carbonate, ethyl methyl carbonate, propylene carbonate, ethylene glycol dimethyl ether, tetrahydrofuran, 2-methyltetrahydrofuran, methyl acetate, ethyl propionate, fluoroethylene carbonate, diethyl ether, diethylene glycol dimethyl ether, triethylene glycol dimethyl ether, tetraethylene glycol dimethyl ether, methyl tert-butyl ether, etc.

In some embodiments of the present application, the organic solvent may comprise one or more of ethylene carbonate (EC), dimethyl carbonate (DMC), diethyl carbonate (DEC), ethyl methyl carbonate (EMC), propylene carbonate (PC), an ether solvent (e.g., ethylene glycol dimethyl ether (DME)), tetrahydrofuran (THF), and 2-methyltetrahydrofuran (2-MTHF).

In some embodiments of the present application, the organic solvent may comprise one or more of ethylene carbonate, propylene carbonate, diethyl carbonate, dimethyl carbonate, ethyl methyl carbonate, methyl acetate, ethyl propionate, fluoroethylene carbonate, diethyl ether, diethylene glycol dimethyl ether, triethylene glycol dimethyl ether, tetraethylene glycol dimethyl ether, methyl tert-butyl ether, etc.

The sodium salt has a high degree of solvation in the solvent and a high conductivity, which are beneficial for film formation and improving the power of the battery.

In some embodiments of the present application, the electrolyte further comprises an additive.

In some embodiments of the present application, the additive comprises one or more of fluoroethylene carbonate (FEC), vinylene carbonate (VC), ethylene sulfate (DTD), 1,3-propane sultone (PS), prop-1-ene-1,3-sultone (PST), succinic anhydride (SA), lithium difluoro(oxalato)borate (LiDFOB), lithium difluorobis(oxalato)phosphate (LiDFOP), tris(trimethylsilyl) phosphate (TMSP), tris(trimethylsilyl) borate (TMSB), ethylene carbonate, propylene carbonate, ethyl methyl carbonate, diethyl carbonate, dimethyl carbonate, dipropyl carbonate, methyl propyl carbonate, ethyl propyl carbonate, butylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments of the present application, the additive comprises one or more of fluoroethylene carbonate (FEC), vinylene carbonate (VC), ethylene sulfate (DTD), 1,3-propane sultone (PS), prop-1-ene-1,3-sultone (PST), succinic anhydride (SA), lithium difluoro(oxalato)borate (LiDFOB), lithium difluorobis(oxalato)phosphate (LiDFOP), tris(trimethylsilyl) phosphate (TMSP), tris(trimethylsilyl) borate (TMSB), etc.

Selecting a suitable additive is helpful for a battery to rapidly form a solid electrolyte interphase (SEI) film and increases the thickness and stability of the SEI film, such that the safety of the battery is improved.

In some embodiments, the current in the formation process of a battery can be reduced, for example, the battery is formed at a current of 0.05 C or 0.1 C, and further, the formation temperature may be set at 25°C, so as to obtain a thickened SEI film. In some embodiments, the negative electrode plate satisfies the following condition: $0.5°C \leq T \times M$

≤ 6°C, wherein T and M are the position of a first exothermic reaction peak and the first-stage weight loss ratio in the differential scanning calorimetry (DSC) analysis for the negative electrode plate, respectively. Further, the test is carried out under a nitrogen atmosphere with a temperature increase rate of 5 °C/min - 10 °C/min.

In some embodiments, the negative electrode plate satisfies the following condition: $0.65°C \leq T \times M \leq 5.2°C$.

In some embodiments, the negative electrode plate satisfies the following condition: $0.75°C \leq T \times M \leq 4.5°C$.

In some embodiments, the $T \times M$ of the negative electrode plate may also be selected from any one of the values below or a range constituted by any two thereof: 0.5°C, 0.52°C, 0.54°C, 0.55°C, 0.56°C, 0.58°C, 0.60°C, 0.65°C, 0.70°C, 0.75°C, 0.80°C, 0.85°C, 0.90°C, 0.95°C, 1°C, 1.5°C, 2°C, 2.5°C, 3°C, 3.5°C, 4°C, 4.5°C, 5°C, 5.5°C, 6°C, etc.

In the present application, the position (T) of the first exothermic reaction S and the first-stage weight loss ratio (M) in the differential scanning calorimetry (DSC) analysis for the negative electrode plate may be obtained from the DSC spectrum of the negative electrode plate. M can reflect the decomposition amount of the solid electrolyte interphase (SEI). For the DSC test of the negative electrode plate, reference can be made to JYT014 - 1996 General Rules for Thermal Analysis. Unless otherwise specified, the following test method can be used: an electrode plate is dried in a vacuum drying oven at 60°C for 6 h, and W3 of a sample is weighed for measuring the weight loss ratio and the DCS exothermic peak of the sample under a nitrogen atmosphere with the temperature being increased to 600°C in a programmed manner.

In some embodiments, the gas atmosphere is nitrogen, argon, or a combination thereof.

In some embodiments, the temperature increase rate may be 5 °C/min - 10 °C/min, and the non-limiting examples thereof are, for example, 5 °C/min, 10 °C/min, etc.

As mentioned above, in the present application, unless otherwise stated, the test conditions for the differential scanning calorimetry analysis may include: a nitrogen atmosphere, and a temperature increase rate of 5 °C/min - 10 °C/min. The non-limiting examples of the temperature increase rate are, for example, 5 °C/min, 7.5 °C/min, 10 °C/min, etc.

The inventors of the present application have speculated that $T \times M$ can reflect the high-temperature resistance of the negative electrode plate to a certain extent. The particle size of negative electrode active material particles affects the starting point of the temperature of an exothermic reaction, and the larger the particles, the higher the temperature at which the reaction starts, and the safer a corresponding battery system. However, when the particles are larger, it is unfavorable for the power of the battery. Therefore, how to balance the safety and the power of a battery is crucial for preparing a battery with a high comprehensive performance. Shifting the position (T) of the first exothermic reaction peak in the differential scanning calorimetry (DSC) analysis for the negative electrode plate to a high temperature can increase the decomposition reaction temperature (corresponding to M) of the solid electrolyte interphase (SEI) film, which is beneficial for increasing the thickness of the SEI film, thus achieving an effect of further improving the safety.

In some embodiments of the present application, the first-stage weight loss ratio M in the differential scanning calorimetry analysis for the negative electrode plate satisfies the following condition: $0.25\% \leq M \leq 3.5\%$; Further, the test conditions for the differential scanning calorimetry analysis include: a nitrogen atmosphere, and a heating step size of 5°C /min - 10 °C/min (e.g., 10 °C/min).

In some embodiments, $0.5\% \leq M \leq 2.5\%$.

In some embodiments, $0.65\% \leq M \leq 2\%$.

In some embodiments, the M may also be selected from any one of the percentages below or a range constituted by any two thereof: 0.28%, 0.3%, 0.4%, 0.5%, 0.6%, 0.7%, 0.8%, 0.9%, 1.0%, 1.1%, 1.2%, 1.4%, 1.5%, 1.6%, 1.8%, 2.0%, 2.1%, 2.2%, 2.3%, 2.4%, 2.5%, 2.6%, 2.8%, 3%, 3.2%, 3.3%, etc.

Controlling the first-stage weight loss ratio M in the differential scanning calorimetry analysis for the negative electrode plate in a relatively suitable range can improve the interface stability of SEI, which is beneficial for improving the safety of a battery and also can achieve a better ion transport and charge/discharge performance. A lower M indicates a thinner SEI film and a poorer interface stability of the battery, such that the safety of the battery is poor. However, if M is too high, it indicates that the SEI is too thick for ion transport, which will deteriorate the charge/discharge performance.

Positive electrode plate

The positive electrode plate comprises a positive electrode current collector and a positive electrode film layer provided on at least one surface of the positive electrode current collector, the positive electrode film layer comprising a positive electrode active material. In some embodiments, the positive electrode plate comprises a positive electrode active material containing sodium ions. In some embodiments, the positive electrode active material containing sodium ions comprises one or more of a Prussian blue compound, a sodium transition oxide, and a polyanionic compound. Suitable positive electrode active materials can be flexibly selected, which enables a sodium ion battery to have more selectivities and wider applicabilities.

The positive electrode active material may comprise, but is not limited to, one or more of a sodium transition metal oxide, a polyanionic compound, and a Prussian blue compound. However, the present application is not limited to the materials listed above, and other materials that are known to be used as a positive electrode active material for a sodium ion battery may also be used.

In some embodiments, the transition metal in the sodium transition metal oxide may comprise one or more of Mn, Fe, Ni, Co, Cr, Cu, Ti, Zn, V, Zr and Ce. A non-limiting example of the sodium transition metal oxide may be $Na_xZO_2$, wherein Z may comprise one or more of Ti, V, Mn, Co, Ni, Fe, Cr and Cu, and $0 < x \leq 1$.

In some embodiments, the sodium transition metal oxide may be $Na_{1-x}Cu_hFe_kMn_lM^1_mO_{2-y}$, wherein $M^1$ may comprise one or more of Li, Be, B, Mg, Al, K, Ca, Ti, Co, Ni, Zn, Ga, Sr, Y, Nb, Mo, In, Sn and Ba, $0 < x \leq 0.33$, $0 < h \leq 0.24$, $0 \leq k \leq 0.32$, $0 < l \leq 0.68$, $0 \leq m < 0.1$, $h + k + l + m = 1$, and $0 \leq y < 0.2$.

In some embodiments, the sodium transition metal oxide may be $Na_{0.67}Mn_{0.7}Ni_qM^2_{0.3-z}O_2$, wherein $M^2$ may comprise one or more of Li, Mg, Al, Ca, Ti, Fe, Cu, Zn and Ba, and $0 < q \leq 0.1$.

In some embodiments, the sodium transition metal oxide may be $Na_aLi_bNi_cMn_dFe_eO_2$, wherein $0.67 < a \leq 1$, $0 < b < 0.2$, $0 < c < 0.3$, $0.67 < d + e < 0.8$, and $b + c + d + e = 1$.

In some embodiments, the polyanionic compound may be a compound having a sodium ion, a transition metal ion, and a tetrahedral $(YO_4)^{n-}$ anion unit. In this case, the transition metal may comprise one or more of Mn, Fe, Ni, Co, Cr, Cu, Ti, Zn, V, Zr and Ce; Y may comprise one or more of P, S and Si; and n represents the valence of $(YO_4)^{n-}$.

In some embodiments, the polyanionic compound may also be a compound having a sodium ion, a transition metal ion, a tetrahedral $(YO_4)^{n-}$ anion unit, and a halogen anion. In this case, the transition metal may comprise one or more of Mn, Fe, Ni, Co, Cr, Cu, Ti, Zn, V, Zr and Ce; Y may comprise one or more of P, S and Si, and n represents the valence of $(YO_4)^{n-}$; and the halogen may comprise one or more of F, Cl and Br.

In some embodiments, the polyanionic compound may also be a compound having a sodium ion, a tetrahedral $(YO_4)^{n-}$ anion unit, a polyhedral unit $(ZO_y)^{m+}$ and optionally a halogen anion. Y may comprise one or more of P, S and Si, and n represents the valence of $(YO4)n-$; Z represents a transition metal and may comprise one or more of Mn, Fe, Ni, Co, Cr, Cu, Ti, Zn, V, Zr and Ce, and m represents the valence of $(ZO_y)^{m+}$; and the halogen may comprise one or more of F, Cl and Br.

In some embodiments, the polyanionic compound may be one or more of $NaFePO_4$, $Na_3V_2(PO_4)_3$, $NaM'PO_4F$ and $Na_3(VO_y)_2(PO_4)_2F^3{-}2_y$ ($0 \leq y \leq 1$), wherein M' in $NaM'PO_4F$ may comprise one or more of V, Fe, Mn and Ni.

In some embodiments, the Prussian blue compound may be a compound having a sodium ion, a transition metal ion, and a cyanide ion $(CN^-)$. In this case, the transition metal may comprise one or more of Mn, Fe, Ni, Co, Cr, Cu, Ti, Zn, V, Zr and Ce. A non-limiting example of the Prussian blue compound may be $Na_aMe_bMe'_c(CN)_6$, wherein Me and Me' each independently may comprise one or more of Ni, Cu, Fe, Mn, Co and Zn, $0 < a \leq 2$, $0 < b < 1$, and $0 < c < 1$.

In some embodiments, the positive electrode active material layer may further comprise a conductive agent to improve the electrical conductivity of the positive electrode. The types of the conductive agent are not particularly limited in the present application and can be selected according to actual requirements. As an example, the conductive agent can be one or more of superconducting carbon, acetylene black, carbon black, Ketj en black, carbon dots, carbon nanotubes, graphite, graphene and carbon nanofibers.

In some embodiments, the positive electrode film layer further optionally comprises a binder. As a non-limiting example, the binder is used to firmly bond the positive electrode active material and an optional conductive agent onto the positive electrode current collector. The types of the binder are not particularly limited in the present application and can be selected according to actual requirements. As a non-limiting example, the binder may be one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, a fluorine-containing acrylate resin, polyacrylic acid (PAA), polyvinyl alcohol (PVA), an ethylene-vinyl acetate copolymer (EVA), a styrenebutadiene rubber (SBR), carboxymethyl cellulose (CMC), sodium alginate (SA), polymethacrylic acid (PMA), and carboxymethyl chitosan (CMCS).

In some embodiments, the positive electrode film layer further optionally comprises a conductive agent. By way of example, the conductive agent may comprise one or more of superconductive carbon, acetylene black, carbon black, Ketjen black, carbon dots, carbon nanotubes, graphene, and carbon nanofibers.

As an example, the positive electrode current collector has two surfaces opposite in its own thickness direction, and the positive electrode film layer is provided on either or both of opposite surfaces of the positive electrode current collector.

In some embodiments, the positive electrode current collector may be a conductive carbon sheet, a metal foil, a carbon-coated metal foil, a porous metal plate, or a composite current collector. The conductive carbon material of the conductive carbon sheet may be one or more of superconducting carbon, acetylene black, carbon black, Ketjen black, carbon dots, carbon nanotubes, graphite, graphene and carbon nanofibers; and the metal materials of the metal foil, the carbon-coated metal foil and the porous metal plate each independently may be selected from one or more of copper, aluminum, nickel, and stainless steel. The composite current collector may be a composite current collector made by compositing a metal foil and a polymer base film.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode plate can be prepared as follows: the above-mentioned components for preparing the positive electrode plate, such as a positive electrode active material, an optional conductive agent, an optional binder and any other components, are dispersed in a solvent (e.g., N-methyl pyrrolidone) to form a positive electrode slurry; and the positive electrode slurry is coated onto a positive electrode current collector, followed by the procedures such as drying and cold pressing, so as to obtain the positive electrode plate.

Separator

In some embodiments, the sodium ion battery further comprises a separator. The type of the separator is not particularly limited in the present application, and any well-known porous-structure separator with good chemical stability and mechanical stability may be selected. For batteries of different systems, such as a sodium ion battery and a lithium ion battery, since the diameters of sodium ions and lithium ions are different, there are different requirements for the structure of the separator. Unlike lithium ions having a small size, sodium ions have a larger diameter, and therefore there are special requirements for thickness. While achieving an isolation function, it is also necessary to ensure that the separator can allow sodium ions with a large particle size to shuttle through, so as to enable the battery to have a good rate performance while ensuring the safety thereof.

In some embodiments, the material of the separator in the sodium ion battery of the present application may be various materials suitable for the separator of an electrochemical energy storage device in the art, and for example, may include but is not limited to one or more of a glass fiber, a non-woven fabric, polyethylene, polypropylene, and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, at least one surface of the separator comprises an insulation material coating, and optionally the insulation material coating is a ceramic coating.

In some embodiments, the matrix material of the separator comprises one or two of polyethylene and polypropylene.

In some embodiments, the separator has a thickness of 5-15 $\mu$m. In some embodiments, the separator has a thickness of 7-13 $\mu$m. By way of example, the thickness of the separator may also be any one of the values below or a range constituted by any two thereof: 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, etc.

In some embodiments, the shrinkage rate of the separator in the TD direction after being heated at 90°C for 1 h is $\leq$ 4%. In some embodiments, the shrinkage rate of the separator in the TD direction after being heated at 90°C for 1 h is selected from 0.5% - 3.5%.

In the present application, the shrinkage rate in the TD direction refers to the shrinkage rate in the width direction, corresponding to a transverse shrinkage rate.

In the present application, the shrinkage rate of the separator can be measured by means of the method as follows: a 10 cm × 10 cm separator is obtained by means of cutting and placed flat on a glass with a smooth surface, then an A4 paper is cut into an area of at least 15 cm × 15 cm to cover the separator, with the separator being in the centre, and four corners of the A4 paper are adhered to the glass by means of an adhesive tape, followed by heating same in an oven for 1 h, then taking same out of the oven and measuring the size of the separator at this point.

The smaller the shrinkage rate, the more stable the separator during the high-temperature baking of the battery and the less likely it is to deform and shrink, thus more effectively avoiding short circuits caused by the failure of the isolation effect of the separator between a positive electrode and a negative electrode.

In some embodiments, the separator has a surface density selected from 2 g/m$^2$ - 6 g/m$^2$. In some embodiments, the separator has a surface density selected from 3 g/m$^2$ - 5 g/m$^2$. In some embodiments, the separator may also have a surface density selected from any one of the values below or a range constituted by any two thereof: 2 g/m$^2$, 2.5 g/m$^2$, 3 g/m$^2$, 3.5 g/m$^2$, 4 g/m$^2$, 4.5 g/m$^2$, 5 g/m$^2$, 5.5 g/m$^2$, 6 g/m$^2$, etc.

In the present application, the surface density of the separator can be measured by means of an instrument and method well known in the art. For example, the mass of a separator having a certain area can be weighed by means of a Sartorius electronic balance, and the surface density of the separator can be calculated by dividing the mass of the separator by the area of the separator.

The lager the surface density is, the less likely the separator is to be pierced, but the weight thereof will be increased; while a smaller surface density results in a looser separator, which is easy to be pierced by sharp corners of hard carbon to cause short circuits.

In some embodiments of the present application, the separator satisfies one or more of the following characteristics:

(tm1): at least one surface of the separator comprises an insulation material coating, and optionally the insulation material coating is a ceramic coating;

(tm2): the matrix material of the separator comprises one or two of polyethylene and polypropylene;

(tm3): the separator has a thickness of 5-15 $\mu$m, and optionally the separator has a thickness of 7-13 $\mu$m;

(tm4): the shrinkage rate of the separator in the TD direction after being heated at 90°C for 1 h is $\leq$ 4%, and optionally the shrinkage rate of the separator in the TD direction after being heated at 90°C for 1 h is selected from 0.5% - 3.5%; and

(tm5): the separator has a surface density selected from 2 g/m$^2$ - 6 g/m$^2$, and optionally the separator has a surface density selected from 3 g/m$^2$ - 5 g/m$^2$.

**In another aspect of the present application**, further provided is the use of the negative electrode plate of the first aspect of the present application for preparing a sodium ion battery.

The negative electrode plate of the first aspect of the present application can be used to prepare a sodium ion battery having the comprehensive advantages of both a high safety and a high energy density.

Assembling of sodium ion battery

In some embodiments, an electrode assembly may be formed by a positive electrode plate, a negative electrode plate and a separator by a winding process or a stacking process.

In some embodiments, the sodium ion battery may comprise an outer package. The outer package may be used to encapsulate the above-mentioned electrode assembly and electrolyte.

In some embodiments, the outer package of the sodium ion battery may be a hard housing, for example, a hard plastic housing, an aluminum housing, a steel housing, etc. The outer package of the sodium ion battery may also be a soft bag, such as a pouch-type soft bag. The material of the soft bag may be plastics, and the examples of plastics may comprise polypropylene, polybutylene terephthalate, polybutylene succinate, etc.

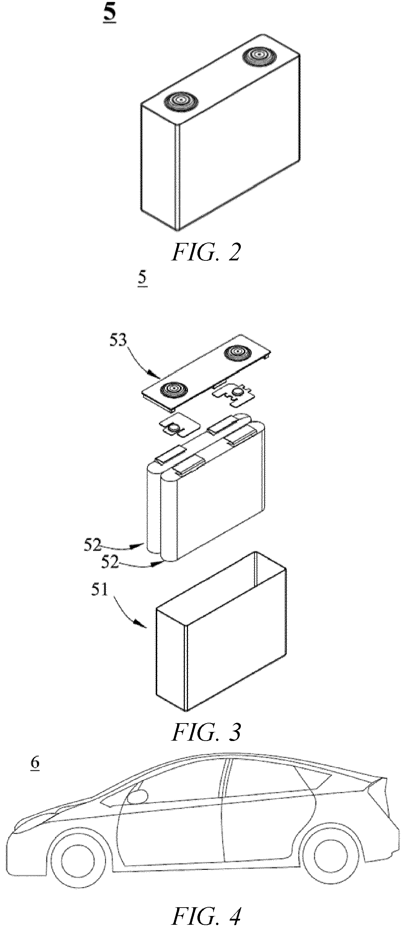

The shape of the sodium ion battery is not particularly limited in the present application, and can be a cylindrical shape, a square shape or any other shape. For example, Fig. 2 shows a sodium ion battery 5 with a square structure as an example.

In some embodiments, with reference to Fig. 3, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assembly 52 contained in the sodium ion battery 5 may be one or more, and can be selected by those skilled in the art according to actual requirements.

In some embodiments, the positive electrode plate, the separator, and the negative electrode plate described above are stacked in sequence to obtain a cell, the separator being located between the positive electrode plate and the negative electrode plate and having an effect of isolation, to obtain a cell, and may also be wound to obtain a cell; and the cell is placed in a package housing (which may be a soft bag, a square aluminum housing, a square steel housing, a cylindrical aluminum housing, and a cylindrical steel housing), and an electrolyte solution is injected, followed by sealing to obtain a sodium ion battery.

**In a third aspect**, the present application provides a power consuming device, comprising a sodium ion battery of the second aspect of the present application.

The power consuming device prepared by using the sodium ion battery provided in the second aspect of the present application has not only a high safety but also a high energy density, and can meet the comprehensive needs of consumers for a high safety and a high performance.

The sodium ion battery may be used as a power source of the power consuming device, or may be used as an energy storage unit of the power consuming device. The power consuming device may include a mobile device, an electric vehicle, an electric train, a ship, and a satellite, an energy storage system, etc., but is not limited thereto. The mobile device may be, for example, a mobile phone, a laptop computer, etc. The electric vehicle may be, for example, a pure electric vehicle, a hybrid electric vehicle, a plug-in hybrid electric vehicle, an electric bicycle, an electric scooter, an electric golf cart, an electric truck, etc., but is not limited thereto.

For the power consuming device, the sodium ion battery can be selected according to the usage requirements thereof.

FIG. 4 shows a power consuming device 6 as an example. The power consuming device may be a pure electric vehicle, a hybrid electric vehicle, a plug-in hybrid electric vehicle, etc. In order to meet the requirements of the power consuming device for a high power and a high energy density of a sodium ion battery, a battery pack or a battery module may be used.

As another example, the device may be a mobile phone, a tablet computer, a laptop computer, etc. The device is generally required to be thin and light, and may use a sodium ion battery as a power source.

Hereinafter, some examples of the present application will be explained. The examples described below are exemplary and are merely for explaining the present application, and should not be construed as limiting the present application. The examples in which the techniques or conditions are not specified in detail are based on the description above or based on the techniques or conditions described in documents in the art or according to the product instruction. All the reagents or instruments used therein, for which the manufacturers are not specified, are conventional products that can be commercially available, or can be synthesized from a commercially available product by means of a conventional manner.

In the examples below, the room temperature denotes 20°C - 30°C, and may be 25°C.

In the examples below, unless otherwise stated, the specifications and models of the raw materials below are: The examples and comparative examples below can be prepared with reference to the parameters in Table 1, Table 2 and Table 3 below.

**1. Preparation of negative electrode plate**

Preparation of negative electrode plate 1

A negative electrode active material of hard carbon, a conductive agent of Super P, a thickener of sodium carboxymethyl cellulose (CMC), and a binder of a styrene butadiene rubber (SBR) emulsion were mixed at a mass ratio of 97 : 0.7 : 1.8 : 0.5, added to a solvent of deionized water, and stirred under the action of a vacuum stirrer until uniform to obtain a negative electrode slurry. The solid content of the negative electrode slurry was 56 wt%. The method for controlling and screening the particle size of the negative electrode active material is as follows: a phenolic resin generated by a reaction of resorcinol and formaldehyde was used as a precursor, polyacrylonitrile (PAN) was used as a coating carbon source, the specific surface area and the amount of closed pores of the material were adjusted by means of carbon coating, the pyrolysis temperature was set at 1300°C under a nitrogen atmosphere, and the material with a target size was obtained by means of preliminary screening and fine screening after the pyrolysis.

The negative electrode slurry prepared above was uniformly coated onto both surfaces of a negative electrode current collector of copper foil by means of an extrusion coater or a transfer coater and dried at 85°C, followed by cold pressing, trimming, slicing, slitting, etc., to obtain a negative electrode plate with a size of 91 mm × 5680 mm.

The negative electrode plates 2-17 were prepared by a method that was basically the same as that for the negative electrode plate 1. The differences between the negative electrode plates 2-10, 13 and 14 and the negative electrode plate 1 were that the sizes of the negative electrode active materials were different, and the negative electrode active materials with volume cumulative distribution particle sizes $D_v99$, $D_v50$, and $D_v10$ as shown in Table 1 were used respectively. The differences between the negative electrode plates 11-12 and 15-17 and the negative electrode plate 1 were that the types and sizes of the negative electrode active materials were different. Reference was made to Table 1.

**2. Preparation of sodium ion battery (examples 1-16 and comparative examples 1-4)**

In examples 1-16 and comparative examples 1-4, the negative electrode plates and the electrolyte solutions were obtained with reference to Table 3, and the other structural parts were prepared and assembled using the same parameters, as shown below.

**2.1. Selection of negative electrode plate**

The negative electrode plates in examples and comparative examples were selected according to Table 3.

**2.2. Preparation of positive electrode plate**

A positive electrode active material of $Na_2MnFe(CN)_6$, a conductive agent of Super P, and a binder of polyvinylidene fluoride (PVDF) were mixed at a mass ratio of 96 : 2.5 : 1.5, added to a solvent of N-methyl pyrrolidone (NMP), and stirred under the action of a vacuum stirrer until uniform to obtain a slurry for a positive electrode active material layer. The solid content of the slurry was 60 wt%.

The positive electrode slurry prepared above was uniformly coated onto a positive electrode current collector of aluminum foil, dried at room temperature, then transferred to an oven at 90°C for further drying, and then cut into a disc having a diameter of 88 mm $\times$ 5450 mm to be used as a positive electrode plate, followed by cold pressing, trimming, slicing and slitting, to obtain a positive electrode plate having a thickness of 150 $\mu$m.

**2.3. Preparation of separator**

A polyethylene film (PE) with a thickness of 7 $\mu$m was used as a base film of a separator, and aluminium oxide, sodium carboxymethylcellulose (CMC) and an acrylate ester were added into deionized water at a weight ratio of 93% : 3% : 4%, and stirred under the action of a vacuum stirrer until uniform to obtain a slurry. The solid content of the slurry was 55 wt%. The resulting slurry was uniformly sprayed onto both surfaces of the base film, with a thickness on one surface being 2 $\mu$m, to obtain the separator.

**2.4. Preparation of electrolyte solution**

In an argon atmosphere glove box with a water content of < 10 ppm, a fully dried sodium salt ($NaPF_6$) was dissolved in an organic solvent of ethylene carbonate (EC), and then an additive of vinylene carbonate (VC) was added and mixed until uniform to obtain an electrolyte solution. The concentration of the sodium salt is 1 mol/L. For the type and amount of the sodium salt, the organic solvent and the additive, reference can be made to Table 3.

**2.5. Assembling of sodium ion battery**

A positive electrode plate, a separator, and a negative electrode plate were stacked in sequence with the separator located between the positive electrode plate and the negative electrode plate to play a role of isolation. Then the resulting stack was wound to form a square bare cell, tabs were welded, and the bare cell was put into a square aluminum housing, and a top cover was welded by using laser. Then same was baked at 80°C under vacuum for water removal, and the electrolyte solution prepared above was injected, followed by sealing. Then, after procedures of standing at 45°C, forming (charging at a constant current of 0.02 C to 3.3 V and then charging at a constant current of 0.1 C to 3.6 V), shaping, capacity tests, etc., a finished hard-housing sodium ion battery having a thickness of 28 mm, a width of 97.5 mm, and a length of 148 mm was obtained.

**3. Test methods**

3.1. Negative electrode plate

(1) Test of volume cumulative distribution particle size $D_vN$ ($D_v99$, $D_v50$, and $D_v10$) of negative electrode active material

Pretreatment of sample: an appropriate amount of a sample to be tested was added to a clean beaker, a surfactant of sodium dodecyl sulfate was added dropwise, and then deionized water was added as a dispersant, followed by an ultrasonic treatment (with a frequency of 120 W for 5 min) to ensure the full dispersion of the sample in the dispersant.

Test: the $D_vN$ was determined with reference to GB/T 19077-2016 particle size distribution-laser diffraction method, using a laser particle size analyzer. An LS-909 laser particle size analyzer (OMEC) was used for test. The sample was poured into a sample injection tower and circulated with the solution to a test light path system; and the scattered light emitted by particles under the irradiation of a laser beam was received and the energy distribution thereof was measured to obtain the particle size distribution characteristics of the particles (shading degree: 8% - 12%), such that the numerical value of $D_vN$ of the material was finally obtained.

(2) Test of specific surface area B of negative electrode plate

A nitrogen adsorption specific surface area analysis test method was used for test, and the BET (Brunauer Emmett Teller) method was used for calculation, wherein the nitrogen adsorption specific surface area analysis test can be carried out by means of a Tri StarII mode specific surface area and porosity analyzer from Micromeritics in the United States, and for the test steps, reference can be made to GB/T 19587-2004.

The detailed steps were as follows: the sample to be measured was selected, which may be directly a negative electrode plate prepared in the above step, or a negative electrode plate disassembled from a battery (in this case, the negative electrode plate needed to be washed with anhydrous ethanol to remove an electrolyte solution, and then dried in a vacuum drying oven at 60°C for 2 hours); and then nitrogen was used as an adsorption gas, the specific surface area and porosity analyzer was used for measuring and plotting an adsorption-desorption curve with a relative pressure of $P/P_0$ being 0-0.99 (P was the equilibrium adsorption pressure, and $P_0$ was the saturated vapor pressure), and the specific surface area of the negative electrode plate was calculated by means of the BET method.

(3) Electrode plate thermal stability coefficient S of negative electrode plate Such a parameter was calculated by using the formula $S = (D_v99 + D_v50)/2B$. $(D_v99 + D_v50)/2$ was determined by the method in point (1) and B was obtained by the method in point (2).

(4) Differential scanning calorimetry (DSC) analysis

Reference was made to JYT014 - 1996 General Rules for Thermal Analysis. The following test method could be used: a negative electrode plate was dried in a vacuum drying oven at 60°C for 6 h, and W3 of the sample was weighed for measuring the weight loss ratio and the DCS exothermic peak of the sample under a nitrogen atmosphere with the temperature being programmatically increased to 600°C at a temperature increase rate of 10 °C/min, so as to obtain the position T of the first exothermic reaction peak and the first-stage weight loss ratio M.

(5) Reaction rate factor P of negative electrode plate

The parameter was calculated by means of the formula $P = C/B$. C was determined according to the method in point (2) of section 1.6.3 and B was obtained by means of the method in point (2).

3.2. Negative electrode plate and cell performance

(1) Capacity per gram of negative electrode plate

Capacity per gram: Reference was made to the WI-ATC-2014 Capacity Per Gram Test Rule.

The sample to be measured was selected, which may be directly a negative electrode plate prepared in the above step, or a negative electrode plate disassembled from a battery (in this case, the negative electrode plate needed to be washed with anhydrous ethanol to remove an electrolyte solution, and then dried in a vacuum drying oven at 60°C for 2 hours). The electrode plate was then punched into 15 small discs having a diameter of 16 mm by means of a punching machine, 12 discs of which were selected randomly, and the weights of the small discs were weighed and averaged, with the average value being denoted as W1; the active material on the small disc was then washed off, and the small disc substrates were dried, weighed and averaged, with the average value being denoted as W2; and for each small disc, the weight of the negative electrode active material on one side of the substrate was (W1 - W2)/2. On the basis of the capacity $C_0$ of the small disc, the capacity per gram was calculated as $C = 2 \times C_0/(W1 - W2)$, in mAh/g.

Test method of $C_0$: the remaining 3 small discs punched above were used, the active material layer on one side of the substrate was wiped off with alcohol, an Na metal plate was used as a counter electrode, and an electrolyte solution was injected (with reference to point 2.4 in example 2 above) to make same into a button battery. Then the battery was charged and discharged at a current of 0.1 C between 0-2 V. The capacity of the battery after being fully charged to 2 V and then fully discharged to 0 V was $C_0$ (mAh).

(2) Tolerable temperature

A hot box test method was used. Reference was made to the heating test method for lithium ion batteries in GB 38031-2020.

In an environment of 1.22°C $\pm$ 5°C, the battery was discharged at 0.33 C to 0% SOC, left to stand for 1 h, and then charged to 100% SOC at a constant current of 0.33 C and a constant voltage (the specified upper limit voltage of the battery was used). The sample was placed into a high-temperature box, and the temperature of the box was increased from room temperature at a rate of 5 °C/min until the battery exploded or the voltage was 0 V. Observation was carried out for 1 hour.

SOC represented the state of charge of a battery, which can reflect the remaining capacity of a battery, and was numerically defined as the ratio of the remaining capacity to the capacity of the battery.

(4) Measurement of 60 s pulse discharge power

The power performance of a battery was determined by measuring the 60 s pulse discharge power of the battery.

More specifically, a cell was placed in a Nebula battery charge/discharge test system at 25°C, charged to an end-of-charge voltage of 3.75 V at a constant current and constant voltage at a rate of 0.5 C, left to stand for 5 minutes, and then discharged at a specific power to ensure that the voltage of the battery reached exactly 2 V at 60 s, and the discharging was stopped and the power at the moment was the 60 s pulse discharge power.

**4. Test results and analysis**

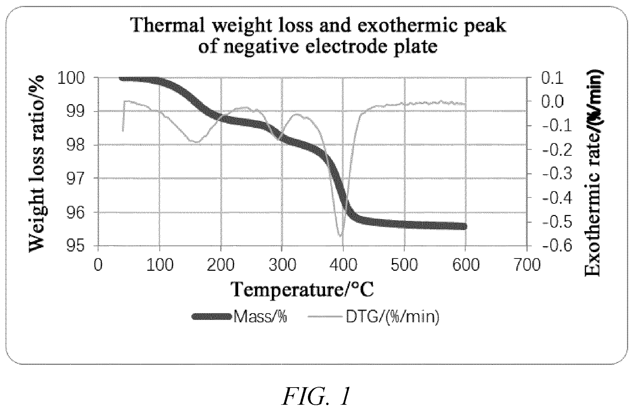

For the test and analysis results of the volume cumulative distribution particle size $D_vN$ ($D_v99$, $D_v50$, and $D_v10$) of a negative electrode plate, the specific surface area B of an electrode plate, the electrode plate thermal stability coefficient S, the DSC analysis, the reaction rate factor P of an electrode plate, the capacity per gram C of an electrode plate, and the reaction rate factor P of an electrode plate, reference can be made to Table 1, Table 2, and Fig. 1. The sodium ion batteries prepared in examples and comparative examples were subjected to DSC analysis, and the tolerable temperature was measured by means of the hot box test.

Fig. 1 shows an exothermic curve-thermal weight loss curve diagram of the differential scanning calorimetry (DSC) test for the negative electrode plate in example 3. It can be seen from the figure that the position T of the first exothermic reaction peak in the DSC spectrum is about 170°C and the first-stage weight loss ratio M in the DSC spectrum is about 1.2%.

The negative electrode plates 1-10 and the negative electrode plates 15-17 all have a $(D_v99 + D_v50)/(2 \times B)$ in a suitable range, in a range of 0.6 μg/m - 5 μg/m, and the sodium ion batteries in examples 1-16 which are prepared using the electrode plates all have a higher tolerable temperature in the hot box test and a higher 60 s pulse discharge power, indicating that the batteries have both a high safety and a high power.

The corresponding $(D_v99 + D_v50)/(2 \times B)$ values of the negative electrode plates 11-14 in comparative examples 1-4 are outside the range of 0.6 μg/m - 5 μg/m, and both the tolerable temperature in the hot box test and the 60 s pulse discharge power are inferior to those of the previous examples.

Table 1.

| Electrode plate no. | Type and size of negative electrode active material | | | | | | |
|---|---|---|---|---|---|---|---|
| | Negative electrode active material type | $D_v10$ | $D_v50$ | $D_v99$ | $(D_v99 + D_v50)/2$ | $D_v50/D_v10$ | $D_v50/D_v99$ |
| | | (μm) | (μm) | (μm) | (μm) | | |
| Negative electrode plate 1 | Hard carbon | 1.1 | 3.0 | 8.0 | 5.5 | 2.7 | 0.4 |
| Negative electrode plate 2 | Hard carbon | 1.3 | 3.5 | 11.0 | 7.3 | 2.7 | 0.3 |
| Negative electrode plate 3 | Hard carbon | 1.3 | 3.5 | 14.0 | 8.8 | 2.7 | 0.3 |
| Negative electrode plate 4 | Hard carbon | 1.5 | 4.0 | 17.0 | 10.5 | 2.7 | 0.2 |
| Negative electrode plate 5 | Hard carbon | 1.8 | 5.0 | 20.0 | 12.5 | 2.8 | 0.3 |
| Negative electrode plate 6 | Hard carbon | 1.8 | 6.2 | 20.0 | 13.1 | 3.4 | 0.3 |
| Negative electrode plate 7 | Hard carbon | 1.9 | 6.5 | 16.0 | 11.3 | 3.4 | 0.4 |
| Negative electrode plate 8 | Hard carbon | 2.0 | 7.0 | 18.0 | 12.5 | 3.5 | 0.4 |
| Negative electrode plate 9 | Hard carbon | 2.3 | 7.5 | 19.0 | 13.3 | 3.3 | 0.4 |
| Negative electrode plate 10 | Hard carbon | 3.0 | 8.0 | 22.0 | 15.0 | 2.7 | 0.4 |
| Negative electrode plate 11 | Graphite | 7.9 | 14.5 | 37 | 25.75 | 1.8 | 0.4 |
| Negative electrode plate 12 | Soft carbon | 7 | 19 | 26 | 22.5 | 2.7 | 0.7 |

(continued)

| Electrode plate no. | Type and size of negative electrode active material | | | | | | |
|---|---|---|---|---|---|---|---|
| | Negative electrode active material type | $D_v10$ | $D_v50$ | $D_v99$ | ($D_v99$ + $D_v50$)/2 | $D_v50/D_v10$ | $D_v50/D_v99$ |
| | | (μm) | (μm) | (μm) | (μm) | | |
| Negative electrode plate 13 | Hard carbon | 0.2 | 2 | 14 | 8 | 10.0 | 0.1 |
| Negative electrode plate 14 | Hard carbon | 1.7 | 7.2 | 32.5 | 19.8 | 4.2 | 0.2 |
| Negative electrode plate 15 | 95% hard carbon + 5% graphite (weight ratio) | 2.0 | 7.0 | 21.0 | 13.8 | 3.6 | 0.33 |
| Negative electrode plate 16 | 75% hard carbon + 25% graphite (weight ratio) | 2.4 | 8.0 | 25.0 | 16.4 | 3.4 | 0.32 |
| Negative electrode plate 17 | 65% hard carbon + 35% graphite (weight ratio) | 2.6 | 9.0 | 30.0 | 17.7 | 3.5 | 0.30 |

Table 2.

| Electrode plate no. | Negative electrode plate | | | | |
|---|---|---|---|---|---|
| | Specific surface area B of electrode plate | Electrode plate thermal stability coefficient S | Position T of first exothermic reaction peak in DSC | Capacity per gram C of electrode plate | Reaction rate factor P=C/B of electrode plate |
| | ($m^2$/g) | (μg/m) | (°C) | (mAh/g) | (mAh·$m^{-2}$) |
| Negative electrode plate 1 | 7.0 | 0.8 | 180 | 330 | 47 |
| Negative electrode plate 2 | 6.8 | 1.1 | 180 | 330 | 49 |
| Negative electrode plate 3 | 6.2 | 1.4 | 170 | 330 | 53 |
| Negative electrode plate 4 | 5.5 | 1.9 | 180 | 330 | 60 |
| Negative electrode plate 5 | 5.0 | 2.5 | 180 | 330 | 66 |
| Negative electrode plate 6 | 4.8 | 2.7 | 180 | 330 | 69 |
| Negative electrode plate 7 | 3.6 | 3.1 | 180 | 330 | 92 |

(continued)

| Electrode plate no. | Negative electrode plate | | | | |
| | Specific surface area B of electrode plate | Electrode plate thermal stability coefficient S | Position T of first exothermic reaction peak in DSC | Capacity per gram C of electrode plate | Reaction rate factor P=C/B of electrode plate |
| | (m²/g) | (μg/m) | (°C) | (mAh/g) | (mAh·m⁻²) |
| Negative electrode plate 8 | 3.3 | 3.8 | 180 | 330 | 100 |
| Negative electrode plate 9 | 3.0 | 4.4 | 180 | 330 | 110 |
| Negative electrode plate 10 | 3.0 | 5.0 | 180 | 330 | 110 |
| Negative electrode plate 11 | 1.07 | 24.1 | 165 | 340 | 318 |
| Negative electrode plate 12 | 2.07 | 10.9 | 173 | 335 | 161.8 |
| Negative electrode plate 13 | 16 | 0.5 | 160 | 310 | 19.375 |
| Negative electrode plate 14 | 3.2 | 6.2 | 188 | 300 | 93.75 |
| Negative electrode plate 15 | 4.7 | 2.5 | 178 | 313.5 | 67 |
| Negative electrode plate 16 | 3.9 | 1.9 | 173 | 264 | 68 |
| Negative electrode plate 17 | 3.5 | 1.8 | 170 | 231 | 66 |
| $S = (D_v99 + D_v50)/(2 \times B).$ | | | | | |

It should be noted that in Table 2, the position T of the first exothermic reaction peak in DSC for multiple negative electrode plates is recorded as 180°C, which is a rounded result, and there are slight fluctuations among the actual values.

Table 3.

| No. | Negative electrode plate no. | Electrolyte solution | $T \times M$ (°C) | Tolerable temperature in hot box test (°C) | 60 s pulse discharge power (W) |
| --- | --- | --- | --- | --- | --- |
| Example 1 | Negative electrode plate 1 | NaPF₆ + EC + 2% VC | 0.5 | 165 | 181.1 |

(continued)

| No. | Negative electrode plate no. | Electrolyte solution | T × M (°C) | Tolerable temperature in hot box test (°C) | 60 s pulse discharge power (W) |
|---|---|---|---|---|---|
| Example 2 | Negative electrode plate 2 | NaPF$_6$ + EC + 2% VC | 1.5 | 170 | 186.6 |
| Example 3 | Negative electrode plate 3 | NaPF$_6$ + EC + 2% VC | 2 | 175 | 192.1 |
| Example 4 | Negative electrode plate 4 | NaPF$_6$ + EC + 2% VC | 3.3 | 180 | 197.5 |
| Example 5 | Negative electrode plate 5 | NaPF$_6$ + EC + 2% VC | 4.8 | 185 | 203.0 |
| Example 6 | Negative electrode plate 6 | NaPF$_6$ + EC + 2% VC | 6 | 195 | 214.5 |
| Example 7 | Negative electrode plate 7 | NaPF$_6$ + EC + 2% VC | 5.3 | 185 | 203.0 |
| Example 8 | Negative electrode plate 8 | NaPF$_6$ + EC + 2% VC | 4.1 | 175 | 192.1 |
| Example 9 | Negative electrode plate 9 | NaPF$_6$ + EC + 2% VC | 2.2 | 165 | 181.1 |
| Example 10 | Negative electrode plate 10 | NaPF$_6$ + EC + 2% VC | 0.6 | 160 | 175.6 |
| Example 11 | Negative electrode plate 15 | NaPF$_6$ + EC + 2% VC | 5.2 | 185 | 203.0 |
| Example 12 | Negative electrode plate 16 | NaPF$_6$ + EC + 2% VC | 4.8 | 180 | 197.5 |
| Example 13 | Negative electrode plate 17 | NaPF$_6$ + EC + 2% VC | 4.3 | 170 | 186.6 |
| Example 14 | Negative electrode plate 6 | NaPF$_6$ + EC + 1.8% VC | 5.1 | 190 | 208.5 |
| Example 15 | Negative electrode plate 6 | NaPF$_6$ + EC + 1.4% VC | 3.8 | 185 | 203.0 |
| Example 16 | Negative electrode plate 6 | NaPF$_6$ + EC + 0.9% VC | 1.4 | 175 | 192.1 |
| Comparative example 1 | Negative electrode plate 11 | NaPF$_6$ + EC + 2% VC | 0.32 | 145 | 133.6 |
| Comparative example 2 | Negative electrode plate 12 | NaPF$_6$ + EC + 2% VC | 0.45 | 150 | 142.3 |
| Comparative example 3 | Negative electrode plate 13 | NaPF$_6$ + EC + 2% VC | 0.3 | 155 | 167.8 |
| Comparative example 4 | Negative electrode plate 14 | NaPF$_6$ + EC + 2% VC | 8 | 145 | 155.3 |

The various technical features of the above embodiments can be combined in any manner, and in order to simplify the description, not all possible combinations of the various technical features of the above embodiments are described. However, the technical features should be considered to be within the scope of the description in the specification, as long as there is no conflict between the combinations of the technical features.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. The examples described above merely illustrate several embodiments of the present application and are described relatively detailed, but should not be construed as limiting the patent scope. In addition, without departing from the gist of the present application, various modifications that may be conceived by those skilled in the art to the embodiments, and other modes constructed by combining some of the constituent elements of the embodiments also fall within the scope of the present application. It should be noted that several variations and improvements may also be made by those of ordinary skill in the art without departing from the concept of the present application, and should fall within the scope of protection of the present application. Therefore, the scope of protection of the present application shall be defined by the appended claims, and the description and the accompanying drawings may be used to explain the contents of the claims.

**Claims**

1. A negative electrode plate comprising a negative electrode active material, wherein the negative electrode active material comprises hard carbon; and

   the negative electrode plate further satisfies the following condition: $0.6\ \mu g/m \le (D_v99 + D_v50)/(2 \times B) \le 5\ \mu g/m$, wherein,
   $D_v99$ represents a particle size corresponding to a cumulative volume distribution percentage of the negative electrode active material reaching 99%, in $\mu m$;
   $D_v50$ represents a particle size corresponding to a cumulative volume distribution percentage of the negative electrode active material reaching 50%, in $\mu m$;
   B represents the specific surface area of the negative electrode plate, in $m^2/g$.

2. The negative electrode plate of claim 1, wherein the negative electrode active material satisfies the following condition: $5\ \mu m \le (D_v99 + D_v50)/2 \le 18\ \mu m$;

   optionally, the negative electrode active material satisfies the following condition: $6\ \mu m \le (D_v99 + D_v50)/2 \le 15\ \mu m$;
   optionally, the negative electrode active material satisfies the following condition: $7\ \mu m \le (D_v99 + D_v50)/2 \le 12\ \mu m$; and
   optionally, the negative electrode active material satisfies the following condition: $8\ \mu m \le (D_v99 + D_v50)/2 \le 10\ \mu m$.

3. The negative electrode plate of claim 1 or 2, wherein the negative electrode plate satisfies the following condition: $0.7\ \mu g/m \le (D_v99 + D_v50)/(2 \times B) \le 4.5\ \mu g/m$; and
   optionally, the negative electrode plate satisfies the following condition: $0.8\ \mu g/m \le (D_v99 + D_v50)/(2 \times B) \le 4.2\ \mu g/m$.

4. The negative electrode plate of any one of claims 1-3, wherein the negative electrode active material further satisfies the following condition: $(x \cdot D_v10) \le D_v50 \le (y \cdot D_v99)$, wherein x = 2.6, and y = 0.4; and
   optionally, x = 3, and y = 0.3.

5. The negative electrode plate of any one of claims 1-4, wherein the negative electrode plate further satisfies the following condition: $30\ mAh \cdot m^{-2} \le CB \le 140\ mAh \cdot m^{-2}$, wherein C is the capacity per gram of the negative electrode plate;
   optionally, $40\ mAh \cdot m^{-2} \le CB \le 125\ mAh \cdot m^{-2}$.

6. The negative electrode plate of any one of claims 1-5, wherein the capacity per gram C of the negative electrode plate satisfies the following condition: $300\ mAh/g \le C \le 350\ mAh/g$, and
   optionally, the capacity per gram C of the negative electrode plate satisfies the following condition: $310\ mAh/g \le C \le 340\ mAh/g$.

7. The negative electrode plate of any one of claims 1-6, wherein B is selected from $2.5\ m^2/g$ - $10\ m^2/g$; and
   optionally, B is selected from $3\ m^2/g$ - $7\ m^2/g$.

8. The negative electrode plate of any one of claims 1-7, wherein the position T of a first exothermic reaction peak in the differential scanning calorimetry analysis for the negative electrode plate satisfies the following condition: 150°C ≤ T ≤ 180°C; wherein the test conditions for the differential scanning calorimetry analysis include: a nitrogen atmosphere, and a temperature increase rate of 10 °C/min; and

optionally, 170°C ≤ T ≤ 180°C.

9. The negative electrode plate of any one of claims 1-8, wherein the negative electrode active material further comprises one or more of a soft carbon, a graphite, and an alloyed negative electrode; and

optionally, the mass percentage of hard carbon in the negative electrode active material is ≥ 50%; and
optionally, the mass percentage of hard carbon in the negative electrode active material is ≥ 90%.

10. A sodium ion battery comprising a positive electrode plate, a negative electrode plate of any one of claims 1-10, a separator and an electrolyte, wherein the separator is provided between the positive electrode plate and the negative electrode plate.

11. The sodium ion battery of claim 10, wherein the electrolyte comprises an electrolyte sodium salt, and the electrolyte sodium salt comprises one or more of sodium hexafluorophosphate, sodium perchlorate, sodium tetrafluoroborate, sodium trifluoromethylsulfonate, sodium bis(fluorosulfonyl)imide, sodium bis(trifluoromethylsulfonyl)imide, sodium trifluoromethanesulfonate and sodium difluorophosphate; and
optionally, the electrolyte sodium salt comprises one or more of sodium hexafluorophosphate, sodium perchlorate, sodium tetrafluoroborate and sodium trifluoromethylsulfonate.

12. The sodium ion battery of claim 11, wherein the electrolyte further comprises an organic solvent, and the organic solvent comprises one or more of ethylene carbonate, dimethyl carbonate, diethyl carbonate, ethyl methyl carbonate, propylene carbonate, ethylene glycol dimethyl ether, tetrahydrofuran, 2-methyltetrahydrofuran, methyl acetate, ethyl propionate, fluoroethylene carbonate, diethyl ether, diethylene glycol dimethyl ether, triethylene glycol dimethyl ether, tetraethylene glycol dimethyl ether and methyl tert-butyl ether; and
optionally, the organic solvent comprises one or more of ethylene carbonate, dimethyl carbonate, diethyl carbonate, ethyl methyl carbonate, propylene carbonate, ethylene glycol dimethyl ether, tetrahydrofuran and 2-methyltetrahydrofuran.

13. The sodium ion battery of claim 11 or 12, wherein the electrolyte further comprises an additive, and the additive comprises one or more of fluoroethylene carbonate, vinylene carbonate, ethylene sulfate, 1,3-propane sultone, prop-1-ene-1,3-sultone, succinic anhydride, lithium difluoro(oxalato)borate, lithium difluorobis(oxalato)phosphate, tris(trimethylsilyl) phosphate, tris(trimethylsilyl) borate, ethylene carbonate, propylene carbonate, ethyl methyl carbonate, diethyl carbonate, dimethyl carbonate, dipropyl carbonate, methyl propyl carbonate, ethyl propyl carbonate, butylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone; and
optionally, the additive comprises one or more of fluoroethylene carbonate, vinylene carbonate, ethylene sulfate, 1,3-propane sultone, prop-1-ene-1,3-sultone, succinic anhydride, lithium difluoro(oxalato)borate, lithium difluorobis(oxalato)phosphate, tris(trimethylsilyl) phosphate, and tris(trimethylsilyl) borate.

14. The sodium ion battery of any one of claims 10-13, wherein the negative electrode plate satisfies the following condition: 0.5°C ≤ T × M ≤ 6°C, wherein,

T and M are the position of a first exothermic reaction peak and the first-stage weight loss ratio in the differential scanning calorimetry analysis for the negative electrode plate, respectively, and the test conditions for the differential scanning calorimetry analysis include: a nitrogen atmosphere, and a temperature increase rate of 10 °C/min; and
optionally, 0.65°C ≤ T × M ≤ 5.2°C; and
optionally, 0.75°C ≤ T × M ≤ 4.5°C.

15. The sodium ion battery of any one of claims 10-14, wherein the first-stage weight loss ratio M in the differential scanning calorimetry analysis for the negative electrode plate satisfies the following condition: 0.25% ≤ M ≤ 3.5%; wherein the test conditions for the differential scanning calorimetry analysis include: a nitrogen atmosphere, and a temperature increase rate of 10 °C/min; and

optionally, 0.5% $\leq$ M $\leq$ 2.5%; and
optionally, 0.6% $\leq$ M $\leq$ 2.1%.

**16.** The sodium ion battery of any one of claims 10-15, wherein the positive electrode plate comprises a positive electrode active material containing sodium ions, and the positive electrode active material containing sodium ions comprises one or more of a Prussian blue compound, a sodium transition metal oxide, and a polyanionic compound.

**17.** A power consuming device comprising a sodium ion battery of any one of claims 10-16.

**18.** Use of a negative electrode plate of any one of claims 1-9 for preparing a sodium ion battery.

*FIG. 1*

**5**

FIG. 2

5

53

52
52
51

FIG. 3

6

FIG. 4

| INTERNATIONAL SEARCH REPORT | International application No. |
|---|---|
| | **PCT/CN2022/118758** |

**A. CLASSIFICATION OF SUBJECT MATTER**

H01M4/587(2010.01)i;H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 负极, 阳极, 硬碳, 硬炭, 比表面积, D50, D99, Dv50, Dv99, batter+, cell?, negative, electrode, anode, hard, carbon, specific, surface, area, BET

**C. DOCUMENTS CONSIDERED TO BE RELEVANT**

| Category* | Citation of document, with indication, where appropriate, of the relevant passages | Relevant to claim No. |
|---|---|---|
| A | CN 113437294 A (NINGDE AMPEREX TECHNOLOGY LTD.) 24 September 2021 (2021-09-24) <br> description, paragraphs 4-18 | 1-18 |
| A | CN 109449446 A (NINGDE CONTEMPORARY AMPEREX TECHNOLOGY CO., LTD.) 08 March 2019 (2019-03-08) <br> entire document | 1-18 |
| A | CN 109841831 A (NINGDE AMPEREX TECHNOLOGY LTD.) 04 June 2019 (2019-06-04) <br> entire document | 1-18 |
| A | KR 20210101540 A (LG ENERGY SOLUTION LTD.) 19 August 2021 (2021-08-19) <br> entire document | 1-18 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 May 2023** | **16 May 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

Form PCT/ISA/210 (patent family annex) (July 2022)

| INTERNATIONAL SEARCH REPORT | | International application No. |
|---|---|---|
| Information on patent family members | | **PCT/CN2022/118758** |

| Patent document cited in search report | | | Publication date (day/month/year) | Patent family member(s) | | | Publication date (day/month/year) |
|---|---|---|---|---|---|---|---|
| CN | 113437294 | A | 24 September 2021 | None | | | |
| CN | 109449446 | A | 08 March 2019 | WO | 2020078357 | A1 | 23 April 2020 |
| CN | 109841831 | A | 04 June 2019 | WO | 2020187106 | A1 | 24 September 2020 |
| | | | | US | 2021351405 | A1 | 11 November 2021 |
| | | | | US | 11563214 | B2 | 24 January 2023 |
| | | | | EP | 3900085 | A1 | 27 October 2021 |
| | | | | EP | 3900085 | A4 | 26 January 2022 |
| | | | | JP | 2021536104 | A | 23 December 2021 |
| KR | 20210101540 | A | 19 August 2021 | None | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 190772016 T
- GB 195872004 T

- GB 380312020 A